# EUROPÄISCHE PATENTSCHRIFT

(11) **EP 3 100 843 B1**
(45) Veröffentlichungstag und Bekanntmachung des Hinweises auf die Patenterteilung: **24.07.2019**
(21) Anmeldenummer: 16171812.7
(22) Anmeldetag: 27.05.2016
(51) Int. Cl.: B29C 48/36, B29C 48/09, B29C 48/87, B29B 7/00, B29B 7/32, B01F 5/06, B29C 48/32

(54) **VERFAHREN ZUR HERSTELLUNG VON RINGFÖRMIGEN EXTRUDATEN**
METHOD FOR THE MANUFACTURE OF ANNULAR EXTRUDATES
PROCÉDÉ POUR LA PRODUCTION DES PRODUITS EXTRUDÉS ANNULAIRES

(30) Priorität: 01.06.2015 EP 15170179
(43) Veröffentlichungstag der Anmeldung: 07.12.2016
(60) Teilanmeldung: 19165497.9
(73) Patentinhaber: Promix Solutions AG, 8406 Winterthur (CH)
(72) Erfinder: Heusser, Rolf, 8400 Winterthur (CH); van Lück, Frank, 47877 Willich (DE)
(74) Vertreter: Herrmann, Johanna

(56) Entgegenhaltungen:
- EP-A1- 0 850 745
- EP-A1- 0 967 004
- EP-A1- 2 103 411
- US-A- 4 574 067
- US-A- 4 746 477

## Beschreibung

Die Erfindung betrifft ein Verfahren zur Herstellung von ringförmigen Extrudaten insbesondere aus Kunststoff, beispielsweise aus niederdichten Kunststoffschäumen. Insbesondere kann eine Extrusionsanlage vorgesehen sein, der ein Kunststoff als Rohmaterial zugeführt werden kann, wie beispielsweise in der EP 2 103 411 A1 für die Herstellung von geschäumten PET-Extrudaten oder in der US 4 746 477 A für die Herstellung eines teilweise geschäumten Kunststoffextrudates gezeigt ist. Der Kunststoff wird im Extruder aufgeschmolzen, sodass ein Strang aus Kunststoffschmelze entsteht. Üblicherweise hat der Strang die Form eines Vollzylinders oder eines balkenartigen Körpers. Dieser Strang kann über ein Werkzeug, welches als Dornelement ausgebildet ist, in einen Strang mit ringförmigem Querschnitt umgewandelt werden. Hierzu weist das Dornelement einen Kern auf, der in den Strang hineinragt. Die Schmelzeströmung umfliesst diesen Kern und tritt in einen Ringspalt ein, sodass der Strang in einen Strang mit ringförmigem Querschnitt umgewandelt wird. Dieser Strang mit einem ringförmigen Querschnitt wird durch einen Ringspalt am Ende des Werkzeugs ausgetragen und bildet ein ringförmiges Extrudat. Das ringförmige Extrudat kann weiter umgeformt werden, kann abgekühlt und zur Erstarrung gebracht werden. Unter ringförmigen Extrudaten werden Extrudate mit beliebiger Aussenkontur verstanden, zum Beispiel rund, rohrförmig oval, rechteckig.

Gemäss Stand der Technik sind Vorrichtungen und Verfahren bekannt, bei denen verschiedene Haltesysteme für Dornelemente und Umlenkelemente eingesetzt werden. In Fig. 1a und Fig. 1b ist ein Steg- oder Lochplattendornhalter gezeigt. Des Weiteren sind Wendelverteiler bekannt, wie in Fig. 2a oder Fig. 2b gezeigt, oder Siebkorbhalterungen, wie in Fig. 3a, 3b gezeigt oder Pinolenhalterungen bekannt, wie in Fig. 4a, 4b gezeigt oder auch aus der US 4 574 067 A1 bekannt.

FR2257411 A1 zeigt einen Extruder mit einem Ringspalt. Um zu vermeiden, dass es in der Oberfläche der Kunststofffolie zu Fehlern kommt, wird die Kunststoffschmelze im Ringspalt spiralförmig geführt, was zu einer Vergleichmässigung des Strömungsprofils führen soll. Allerdings kann nicht vermieden werden, dass die Strömungsgeschwindigkeit im wandnahen Bereich des Ringspalts geringer als in einem Zentralbereich des Ringspalts ist. Es hat sich gezeigt, dass mit den bekannten Vorrichtungen und Verfahren nicht immer eine zufriedenstellende, konstante Extrudatqualität erreicht werden kann, insbesondere wenn geschäumte Extrudate hergestellt werden sollen.

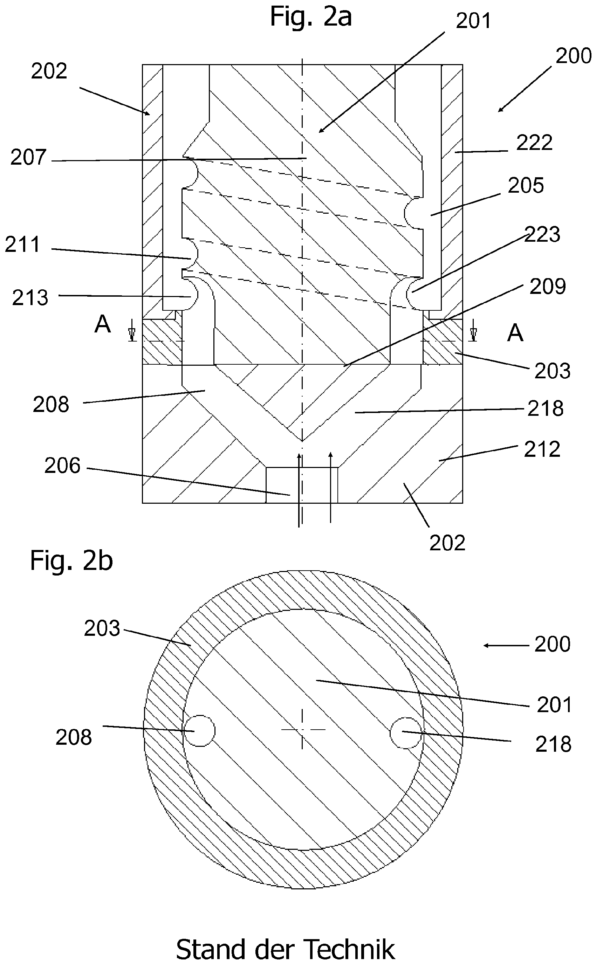

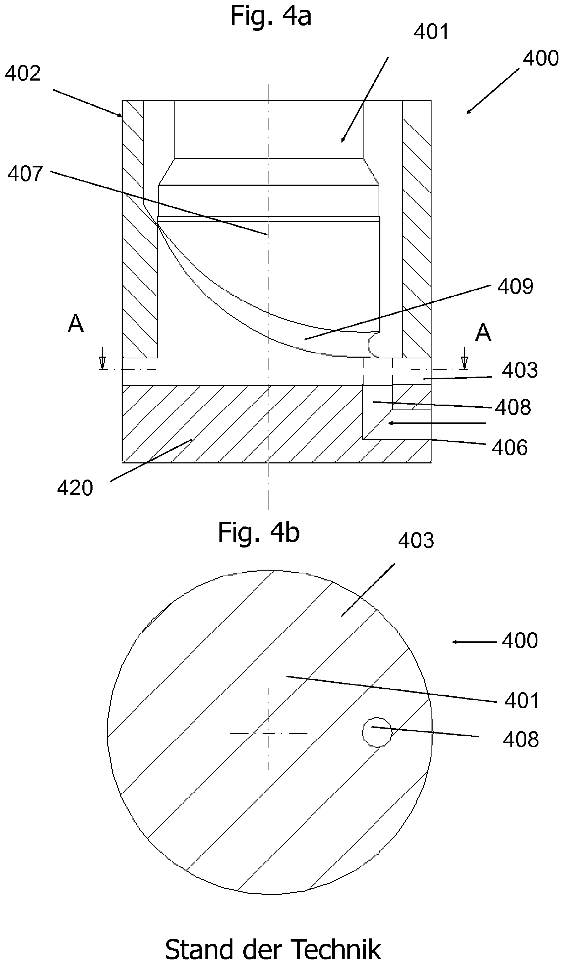

Daher wird beispielsweise in der DE2621770 A1 ein Extruder-Spritz- oder Blaskopf zur Herstellung von Hohlprofilen vorgeschlagen, der einen Dorn enthält, der durch Stege in der Düse gehalten wird und welcher zusätzlich stromabwärts der Stege im Ringraum eine Anzahl von in Fliessrichtung aufeinanderfolgenden ringförmigen Umschichtelementen enthält. Diese Umschichtelemente sind als zylindrische oder konische Ringe ausgebildet, die um zur Fliessrichtung parallele Achsen verwundene Schaufeln tragen. Die Schaufeln sind allerdings alle in derselben Drehrichtung verwunden, was zur Folge hat, dass die Strömung schraubenförmig umgelenkt wird, was in ähnlicher Form auch durch die Wendel gemäss Fig. 2a oder durch den Verteilerkanal gemäss Fig. 4a erreicht wird und sich gerade aus dem Grund nicht ideal erwiesen hat. Auch die DE2461340 A1 zeigt eine Wendevorrichtung, mittels welcher die Strömung um 180° gewendet wird, was die Homogenität der im Ringspalt strömenden Schmelze erhöht und insbesondere sicherstellen soll, dass innerhalb des Schmelzestroms es zu einem Temperaturausgleich kommt, damit Unterschiede in den Wandstärken des ringförmigen Extrudats ausgeglichen werden können. Allerdings wird durch die Wendevorrichtung der DE2461340 A1 ebenfalls eine spiralförmige Strömung erzeugt, was zwar die bei Spritzköpfen mit zwei Austrittsdüsen auftretenden speziellen Temperaturunterschiede ausgleichen kann. Diese Temperaturunterschiede bewirken, dass im Ringquerschnitt an verschiedenen Stellen des Rings unterschiedliche Schmelzetemperaturen auftreten. Es wird aber keine Aussage darüber gemacht, wie mit Temperaturunterschieden in der Schmelzeströmung umzugehen sind, die über die Ringbreite zustande kommen, beispielsweise weil die Kernströmung eine andere Temperatur aufweist als die Randströmung. Durch die Wendel bleibt aufgrund der geringen Durchmischung aber die Kernströmung und Randströmung im Wesentlichen erhalten, sodass ein Temperaturausgleich über die Ringbreite mit der Vorrichtung der DE2461340 A1 nicht möglich ist.

Unter guter Schaumqualität werden Schaumprodukte verstanden, die sich zum Beispiel durch hohe mechanische Reiss- oder Druckfestigkeiten, geringe Dichten oder hohe Isolationswerte ausweisen. Diese Werte werden durch die Zellstruktur des Schaumproduktes beeinflusst. Vielfach sind eine enge Zellgrössenverteilung, möglichst kleine Zellgrössen und möglichst viele Zellen pro Volumen mit möglichst dünnen Zellwänden für gute Schaumqualitäten wichtig. Es sollten zudem sowohl über die Zeit wie auch im ganzen Produktquerschnitt möglichst gleichbleibende Zellstrukturen erreicht werden.

Die bekannten Haltesysteme und Umlenkelemente sind für die gleichmässige Aufteilung einer strangförmigen viskosen Kunststoffschmelze auf einen Ringquerschnitt aus den in der nachfolgenden detaillierten Beschreibung genannten Gründen alle nicht ideal.

Kunststoffschmelzen werden typischerweise bei Verarbeitungstemperaturen von 80 bis 300 Grad verarbeitet und weisen eine hohe Viskosität von mehr als 1000 Pas auf. Bei solchen Kunststoffschmelzen können am Eintritt in die Vorrichtung vorhandene Temperaturinhomogenitäten nur ungenügend ausgeglichen werden, selbst wenn eine Beheizung von Aussen- und/oder Innenteil der Vorrichtung erfolgt, insbesondere eine Beheizung des Mantelelements oder Dornelements. Die bestehenden Haltesysteme, speziell Steg-, Lochplatten- und Siebkorb-Haltesysteme stören das gleichmässige Fliessen des Massestroms und führen demzufolge zu Verweilzeit- und Strömungsgeschwindigkeitsungleichheiten. Wendelverteiler, Siebkorbhalterungen und Pinolenhalterungen erzeugen vielfach einen sehr hohen Druckverlust. Das Fliessverhalten speziell von Wendelverteilern und Pinolenhalterungen ist abhängig von den Prozessbedingungen wie Durchsatz und Temperatur und den rheologischen Eigenschaften des Massestroms. Sie müssten entsprechend für jeden Betriebspunkt angepasst sein, was praktisch nicht umsetzbar ist. Temperaturunterschiede, also inhomogene Temperaturverteilungen entlang des Fliessquerschnitts, sowie unterschiedliche Verweilzeiten und Strömungsgeschwindigkeiten sind vielfach Grund für Qualitätsprobleme, wie unterschiedliche Wanddicke, ungleichmässige Oberflächenoptik oder bei geschäumten Produkten ungleichmässiger Aufschäumgrad und ungleichmässige Zellstruktur. Zudem können ungleichmässige Temperaturverteilungen und Verweilzeiten zur Zersetzung der Kunststoffschmelze führen. Bedingt durch die durch die Haltesysteme verursachten Störstellen müssen die Kanäle bis zum Ringspalt von grosser Baulänge sein, bis die Kunststoffschmelze aus der Vorrichtung ausgetragen wird.

Es ist des Weiteren ein strömungsformendes Organ mit einem ringförmigen statischen Mischer aus der EP 0 850 745 A1 mit den Merkmalen des Oberbegriffs bekannt, mittels welchem Inhomogenitäten eines Strömungsprofils einer Kunststoffschmelze ausgeglichen werden können. Verwendung findet das strömungsformende Organ der EP 0 850 745 A1 in einer Nadelverschlussdüse einer Spritzgiessmaschine oder für eine Hohlkörperextrusionsanlage.

Daher besteht Bedarf an einer Lösung, gemäss welcher eine homogene Schmelzeströmung im Ringspalt erzeugbar ist. Aufgabe der Erfindung ist es, ein Verfahren zur Herstellung eines ringförmigen Extrudats zu optimieren, um eine gleichmässige Extrudatqualität zu erhalten, das heisst insbesondere ein Extrudat mit homogenen physikalischen Eigenschaften, welche in verbesserten mechanischen Eigenschaften, wie Festigkeit, Zähigkeit oder Formbeständigkeit resultiert. Die gleichmässige Extrudatqualität soll insbesondere unabhängig von den Prozessbedingungen und unabhängig von dem extrudierten Kunststoffmaterial immer erreicht werden.

Hierzu soll ein Verfahren zur Herstellung ringförmiger Extrudate vorgeschlagen werden, mittels welchem eine Kunststoffschmelze möglichst mit gleichmässiger Temperatur und gleichmässiger Geschwindigkeit sowie mit geringem Druckverlust auf den Ringquerschnitt verteilt wird. Eine in dem Verfahren eingesetzte Vorrichtung soll dabei möglichst kurz und kompakt ausgeführt sein, sowie möglichst für verschiedene Betriebspunkte und Kunststoffschmelzen unterschiedlicher Zusammensetzung eine gleichmässige Temperaturverteilung sowie eine im Wesentlichen gleiche Strömungsgeschwindigkeit über den Umfang des Ringspalts sowie über die Spaltbreite erreichen.

Die Lösung der Aufgabe erfolgt durch ein Verfahren gemäss Anspruch 1. Vorteilhafte Verfahrensvarianten sind Gegenstand der Ansprüche 2 bis 6.

Eine Vorrichtung zur Herstellung eines ringförmigen Extrudats umfasst mindestens ein ortsfestes Mantelelement und mindestens ein ortsfestes Dornelement, welches in einem Mantelelement angeordnet ist. Ein Kunststoff kann in einem Extruder zu einer Kunststoffschmelze aufgeschmolzen werden. Die Kunststoffschmelze kann nach Verlassen des Extruders in einen Schmelzekanal eintreten. Dieser Schmelzekanal kann als Zufuhrkanal für die Kunststoffschmelze für die Vorrichtung dienen. Das Mantelelement enthält einen Schmelzekanal, wobei das Dornelement in dem Schmelzekanal angeordnet ist, sodass der Schmelzekanal sich zumindest am Austritt aus der Vorrichtung ringförmig um das Dornelement erstreckt. Zwischen dem Dornelement und dem Mantelelement wird ein Ringkanal ausgebildet. Der Ringkanal enthält einen statischen Mischer, wobei das Mantelelement zumindest teilweise durch den statischen Mischer im Mantelelement gehalten wird. Insbesondere können mindestens 20% der Kräfte, die durch die Kunststoffschmelze auf das Dornelement einwirken über den statischen Mischer in das Mantelelement eingeleitet werden. Nachfolgend werden diese Kräfte auch als Haltekräfte bezeichnet, da sie das Dornelement im Mantelelement halten. Das heisst, mindestens 20% dieser Haltekräfte werden durch den statischen Mischer aufgenommen. Nach einem Ausführungsbeispiel können mindestens 30% der Haltekräfte durch den statischen Mischer aufgenommen werden. Hierdurch kann auf die zum Zweck der Befestigung des Dornelements im Mantelelement vorgesehenen Halterungen, welche im Strömungsweg angeordnet sind, zumindest teilweise verzichtet werden. Nach einem Ausführungsbeispiel können mindestens 40% der Haltekräfte, insbesondere mehr als 60% der Haltekräfte durch den statischen Mischer aufgenommen werden. Gemäss dieser Ausführungsbeispiele kann neben einer weiteren Verringerung der Anzahl oder der Querschnittsfläche der Halterungen auch eine weitere Stabilisierung des Dornelements im Mantelelement erfolgen. Insbesondere können die Mischer stromabwärts des Konusverteilers angeordnet werden, vorzugsweise zumindest teilweise in der Nähe des dem Konusverteiler gegenüberliegenden Endes des Dornelements, sodass das Dornelement stabil im Ringkanal gehalten werden. Bei der Anbindung des Dornelements über herkömmliche Halteelemente müssen diese möglichst weit entfernt vom Austrittsende der Schmelze aus der Vorrichtung liegen. Des Weiteren besteht die Anforderung an die Halterungen, dass sie auf die Strömung möglichst wenig Einfluss nehmen sollen, was dadurch erreicht wird, dass die Halterungen möglichst weit entfernt vom Auslassende des Mantelelements angeordnet sind. Daraus ergibt sich eine filigrane Bauweise, damit die Halterungen den Schmelzefluss möglichst wenig stören, respektive sich dieser vor dem Austritt wieder beruhigt. Diese Anforderung führt im Stand der Technik durch diese schwache Aufhängung zu einer unstabilen Verbindung zwischen Dornelement und Mantelelement, was zu Verschwenkungen des Dornelements relativ zum Mantelelement führen kann.

Das heisst, im Gegensatz zu den Dornelementen nach dem Stand der Technik kann mittels dieser Massnahme nicht nur eine verbesserte Durchmischung der Polymerschmelze erfolgen, sondern wird auch die Dickenabmessung der Schmelze in einem engen Toleranzbereich konstant gehalten, da durch den statischen Mischer eine Zentrierung des Dornelements insbesondere an der Austrittsseite erfolgt. Daher kann mit dem erfindungsgemässen Verfahren überraschenderweise eine signifikant höhere Masshaltigkeit der Kunststoffschmelze erreicht werden, sodass eine signifikant bessere Produktqualität erzielbar ist. Zudem kann die Vorrichtung sehr viel kompakter und auch kostengünstiger gebaut werden.

Nach einem besonders bevorzugten Ausführungsbeispiel können die Halterungen vollständig durch statische Mischer ersetzt werden. Somit kann auf eine Halterung, ein Einsetzelement oder ein Halteelement für das Dornelement verzichtet werden. Der statische Mischer ist derart ausgestaltet, dass das Dornelement im Inneren des Mantelelements befestigt wird, sodass ein Verschwenken des Dornelements relativ zum Mantelelement ausgeschlossen ist. Der statische Mischer umfasst eine Mehrzahl von Einbauelementen, wobei zumindest ein Teil der Einbauelemente mit dem Dornelement und mit dem Mantelelement verbunden ist. Nach einem Ausführungsbeispiel weist der Mischer eine um die Mittenachse rotationssymmetrische Anordnung von Einbauelementen auf. Insbesondere kann ein Teil der Einbauelemente in einem Winkel zur Strömungsrichtung angeordnet ist, der grösser als 0 Grad ist.

Nach einem Ausführungsbeispiel können die Einbauelemente eine Länge, eine Breite und eine Dicke aufweisen, wobei die Länge der Einbauelemente grösser als der Normalabstand zwischen der Innenwand des Mantelelements und der Aussenwand des Dornelements ist. Die Breite der Einbauelemente kann kleiner als der Normalabstand zwischen der Innenwand des Mantelelements und der Aussenwand des Dornelements sein. Insbesondere kann die Breite der Einbauelemente kleiner als die Hälfte des Normalabstands zwischen der Innenwand des Mantelelements und der Aussenwand des Dornelements sein. Besonders bevorzugt kann die Breite der Einbauelemente kleiner als die Hälfte des Normalabstands zwischen der Innenwand des Mantelelements und der Aussenwand des Dornelements sein. Nach einem Ausführungsbeispiel können die Einbauelemente ringförmige, rohrförmige, stabförmige oder flächige, beispielsweise flügelartige Stegelemente umfassen.

Nach einem Ausführungsbeispiel weist ein Stegelement eine Stegbreite und eine Stegdicke auf, wobei die Stegbreite und die Stegdicke in einer Ebene gemessen werden, die im Wesentlichen normal zur Steglängsachse ist. Beispielsweise entspricht die Stegdicke in etwa der Stegbreite. Die Stegdicke und Stegbreite können auch innerhalb eines statischen Mischers oder in einander nachfolgenden statischen Mischern variieren und können insbesondere in Fliessrichtung gesehen abnehmen.

Nach einem Ausführungsbeispiel kann zumindest ein Teil der Einbauelemente als Stegelemente ausgebildet sein, wobei zumindest ein Teil der Stegelemente eine Gruppe ausbilden kann, wobei die Stegelemente je eine Mittenachse aufweisen können, wobei insbesondere die Mittenachsen der zu der Gruppe gehörigen Stegelemente einen im wesentlichen konstanten Winkel zur Mittenachse des Mischers einschliessen können.

Nach einem Ausführungsbeispiel können die Einbauelemente eine erste Gruppe von Stegelementen sowie eine zweite Gruppe von Stegelementen umfassen, wobei die erste Gruppe von Stegelementen sich entlang einer gemeinsamen ersten Gruppenebene erstreckt und die zweite Gruppe von Stegelementen sich entlang einer zweiten gemeinsamen Gruppenebene erstreckt, wobei die erste Gruppe kreuzweise zur zweiten Gruppe angeordnet ist. Insbesondere kann das Haltesystem für das Dornelement somit aus sich kreuzenden Stegen bestehen, die kreissegmentartig im Ringkanal und/oder in dem Zufuhrkanal angeordnet sind. Mindestens ein Teil der Stege kann in einem Winkel ungleich null Grad zur Strömungsrichtung angebracht sein und sich von der Innenwand des Mantelelements zur Aussenwand des Dornelements erstrecken. Insbesondere können die Gruppenebenen durch die Mittenachsen der zu der entsprechenden Gruppe gehörigen Stegelemente oder Rohrelemente gebildet werden.

Mindestens ein Teil der Einbauelemente, also insbesondere der Stegelemente, kann Kanäle aufweisen, wobei die Kanäle sich von einem ersten Ende des Stegelements zu einem zweiten Ende des Stegelements erstrecken, wobei das Mantelelement je einen korrespondierenden Kanal enthält, der mit dem ersten Ende und zweiten Ende des Stegelements in fluidleitender Verbindung steht. Unter fluidleitender Verbindung werden Kanäle verstanden, durch die zum Beispiel eine Flüssigkeit, ein Gas, eine Schmelze, beispielsweise eine andere Polymerschmelze strömen kann oder die auch feste Stoffe enthalten können. Beispielsweise können Kabel durch die Kanäle gezogen oder durchgepresst werden. Diese Kanäle bilden somit Durchgänge in den Einbauelementen des statischen Mischers aus.

In dem erfindungsgemässen Verfahren enthält der Ringkanal eine Mehrzahl von statischen Mischern, die in Strömungsrichtung hintereinander angeordnet sind.

Dabei enthält der Ringkanal einen ersten statischen Mischer und einen zweiten statischen Mischer, wobei der erste statische Mischer in einem Abstand zum zweiten statischen Mischer angeordnet ist.

Nach einem Ausführungsbeispiel können auch statische Mischer im konischen Übergangsbereich angeordnet sein. Der konische Übergangsbereich befindet sich am Beginn des Dornelements, das heisst an dem Ort, an welchem die Kunststoffschmelze in den Ringkanal zwischen Dornelement und Mantelelement eintritt. Vor Eintritt in den konischen Übergangsbereich ist die Strömung als Rohrströmung ausgebildet, im konischen Übergangsbereich sowie im anschliessenden Ringkanal bildet sich eine Ringströmung aus. Somit kann ein statischer Mischer auch im Übergangsbereich von der Rohrströmung zur Ringströmung angebracht sein.

Nach einem Ausführungsbeispiel kann sich der Abstand zwischen Mantelelement und Dornelement im Bereich des statischen Mischers erweitern oder verengen. Die Querschnittsfläche des Ringkanals kann sich somit entlang der Mittenachse vergrössern oder verringern. Auch können sich der Innendurchmesser und/oder der Aussendurchmesser des Ringkanals in Fliessrichtung ändern.

Insbesondere kann der statische Mischer oder jeder der statischen Mischer eine Mehrzahl von Einbauelementen enthalten. Die Einbauelemente können nach einem der vorhergehenden Ausführungsbeispiele ausgestaltet sein.

Insbesondere können Stegelementgruppen vorgesehen sein, wobei eine erste Stegelementgruppe um die Mittenachse des Ringkanals um einen spitzen Winkel relativ zu einer zweiten Stegelementgruppe gedreht ist. Gemäss eines Ausführungsbeispiels kann ein statischer Mischer eine Mehrzahl von ersten und zweiten Stegelementgruppen enthalten. Jede der Stegelementgruppen kann eine Mehrzahl von Stegelementen enthalten. Die Stegelemente einer Stegelementgruppe sind vorzugsweise im Wesentlichen parallel zueinander angeordnet. Die Stegelemente können geradlinig ausgebildet sein oder eine Kurvenform aufweisen. Der Querschnitt der Stegelemente kann insbesondere rechteckig sein. Nach einem Ausführungsbeispiel kann eine Mehrzahl von ersten und zweiten Stegelementgruppen sich im Wesentlichen parallel zur Innenwand des Mantelelements und der Aussenwand des Dornelements erstrecken. Die Stegelemente jeder der ersten und zweiten Stegelementgruppen sind kreuzweise zueinander angeordnet. Die Stegelemente schliessen mit der Hauptströmungsrichtung, die im Wesentlichen parallel zur Längsachse erfolgt, einen spitzen Winkel ein.

Zwischen benachbarten Stegelementgruppen kann ein Abstand vorgesehen sein, der frei von Einbauelementen ist, sodass jede der Stegelementgruppen einen statischen Mischer ausbildet.

Verschiedene Typen von Einbauelementen und verschiedene statische Mischer können miteinander kombiniert werden, das heisst in Bezug auf die Hauptströmungsrichtung parallel oder hintereinander angeordnet sein.

Allen Einbauelementen ist gemeinsam, dass sie eine Bauweise aufweisen, die geeignet ist, um auch die Krafte von Innenteil zu Aussenteil zu ubertagen. Aus diesem Grund ist es erforderlich, dass die Halteelemente möglichst steif ausgeführt sind. Die Verbindung und Kraftübertragung erfolgt von Innenteil, also dem Dornelement zum Aussenteil, also dem Mantelelement zum Grossteil durch die sich kreuzenden Einbauelemente des statischen Mischers. Nach einer Variante kann die Schmelzezufuhr von hinten erfolgten, also die Schmelze im Mantelelement oder Dornelement umgelenkt werden. Das Dornelement weist nach einem Ausführungsbeispiel einen mittig angeordneten Konus auf, um welchen die die Schmelze herumgeführt wird und demzufolge aufgeweitet wird. Die Einbauelemente können insbesondere als eine Mehrzahl von zueinander parallel angeordneten Stegelementen ausgebildet sein. Die Stegelemente können dabei eine Krümmung aufweisen, sodass parallele Stegelemente dieselbe Krümmung aufweisen, aber nicht notwendigerweise dieselbe Länge. Zumindest ein Teil der Stegelemente kann eine Gruppe ausbilden, wobei die Stegelemente je eine Mittenachse aufweisen, wobei die Mittenachsen der zu der Gruppe gehörigen Stegelemente einen im wesentlichen konstanten Winkel zur Mittenachse des Mischers einschliessen, wobei der Winkel insbesondere ungefähr 90° beträgt. Die Stegelemente können zumindest teilweise als Querstege ausgebildet sein. Gemäss eines weiteren Ausführungsbeispiels kann der statische Mischer Einbauten aufweisen, die in einer Mehrzahl von Ringsegmenten angeordnet sind. Zur Beheizung, Kühlung oder für Regelungszwecke kann zumindest ein Teil der Einbauten Hohlräume für ein Wärmeträgerfluid, für Kabel, Heizelemente für Widerstandsheizungen und dergleichen enthalten.

Bedingt durch die erreichbare Temperaturhomogenisierung in der Schmelze kann die Baulänge der Vorrichtung verkürzt werden. Insbesondere kann die Distanz des in Fliessrichtung gesehen letzten statischen Mischers vom Austrittsende aus der Vorrichtung maximal 30, besonders bevorzugt maximal 20 cm betragen.

Unter ringförmigem Extrudat wird eine beliebige Form verstanden, die einen Kern mit beliebiger Form umschliesst. Der Kern kann ein beliebiges Material aus der Gruppe der Gase, Flüssigkeiten, oder Festkörper enthalten. Der Festkörper kann insbesondere ein Element der Gruppe der Kunststoffe oder ein Metall enthalten. Die Kunststoffe können gleiche oder unterschiedliche Zusammensetzung aufweisen. Das die Vorrichtung verlassende ringförmige Extrudat kann wahlweise zu einem Rohr weiterverarbeitet werden, oder nach dem Umformen zu Flaschen, oder nach dem seitlichen Aufschneiden zu Folien, oder beim Einführen eines Kernes zum Beispiel zu einem Kabel. Alternativ kann ein Extrudat ohne Kern produziert werden, wie z.B. Dekorprofilleisten. Daher ist die Fliesskanalgeometrie stromabwärts der Vorrichtung beliebig gestaltbar.

Gemäss einer Verfahrensvariante können vor oder in der Vorrichtung ein Fluid oder ein Gas zudosiert werden, wobei das Fluid oder das Gas zumindest ein Element aus der Gruppe der Additive, Farbstoffe oder Treibmittel enthält.

Gemäss einer Verfahrensvariante können mittels der Vorrichtung mehrere ringförmige Extrudate als aufeinanderliegende Schichten erzeugt werden.

Gemäss einer Verfahrensvariante kann das Extrudat auch aufschäumen und zu einem geschäumten Produkt verarbeitet werden. Insbesondere können die Vorrichtung und das Verfahren nach einem der vorhergehenden Ausführungsbeispiele zur Herstellung von geschäumten ringförmigen Extrudaten zum Einsatz kommen, wobei insbesondere niederdichte Kunststoffschäume verarbeitet werden können.

Als niederdichte Kunststoffschäume werden Kunststoffschäume mit einer Dichte von weniger als 500 kg/m³ angesehen. Nach einer Verfahrensvariante wird der Kunststoff in einem ersten Extruder aufgeschmolzen, danach wird die Schmelze durch einen statischen Mischer geführt, mit dem die Temperatur der Schmelze über den ganzen Querschnitt homogenisiert wird und gleichzeitig gekühlt oder geheizt werden kann, um auf diese Weise eine exakte Schmelzetemperatur zu erreichen. Danach wird die temperaturstabilisierte gekühlte Kunststoffschmelze in die Vorrichtung eingeführt. Insbesondere kann die temperaturstabilisierte gekühlte Kunststoffschmelze nach Verlassen des Extruders in einen Schmelzekanal eintreten. Dieser Schmelzekanal kann als Zufuhrkanal für die Kunststoffschmelze für die Vorrichtung dienen. Das Mantelelement enthält einen Schmelzekanal, wobei das Dornelement in dem Schmelzekanal angeordnet ist, sodass der Schmelzekanal sich zumindest am Austritt aus der Vorrichtung ringförmig um das Dornelement erstreckt. Zwischen dem Dornelement und dem Mantelelement wird ein Ringkanal ausgebildet. Der Ringkanal enthält einen statischen Mischer, wobei das Dornelement zumindest teilweise durch den statischen Mischer im Mantelelement gehalten wird. Vorteilhafterweise werden durch den statischen Mischer zumindest 20%, vorzugsweise zumindest 30%, besonders bevorzugt zumindest 40%, insbesondere mehr als 60% der Haltekräfte aufgenommen. Nach Verlassen der Vorrichtung kann die ringförmige Kunststoffschmelze anschliessend beispielsweise über eine Düse ausgetragen werden, sodass im Anschluss an die Düse eine geschäumte ringförmige Kunststoffschmelze herstellbar ist. Mittels dem erfindungsgemässen Verfahren sind geschäumte Kunststoffextrudate mit erhöhten Wärmeisolationswerten und/oder geringerer Schaumdichte erzeugbar.

Nach einem Ausführungsbeispiel umfasst das Verfahren zur Herstellung eines ringförmigen geschäumten Extrudats unter Anderem folgende Schritte: ein Kunststoff wird in einem Extruder zu einer Kunststoffschmelze aufgeschmolzen. Die Schmelze tritt nach Verlassen des Extruders in einen Schmelzekanal ein, der in einem ortsfesten Mantelelement angeordnet ist. In dem Schmelzekanal ist ein ortsfestes Dornelement angeordnet, um welches die Schmelze herum fliesst, sodass durch das Dornelement ein ringförmiger Schmelzestrom erzeugt wird. Zwischen dem Dornelement und dem Mantelelement wird ein ringförmiger Kanal ausgebildet. Der ringförmige Kanal enthält einen statischen Mischer, wobei das Dornelement zumindest teilweise durch den statischen Mischer im Mantelelement gehalten wird. Der statische Mischer umfasst eine Mehrzahl von Einbauelementen, wobei zumindest ein Teil der Einbauelemente mit dem Dornelement und mit dem Mantelelement verbunden ist. Insbesondere kann der statische Mischer ein Temperierelement aufweisen, mittels welchem die Temperatur der Schmelze über den ganzen Querschnitt homogenisiert wird, wobei der statische Mischer gekühlt werden kann, um eine temperaturstabilisierte gekühlte Schmelze zu erhalten, danach die temperaturstabilisierte Schmelze über ein Düsenelement ausgetragen wird.

Nach einem Ausführungsbeispiel wird der Kunststoffschmelze ein Treibmittel zugegeben, sodass eine mit Treibmittel beladene Schmelze erhalten wird, die einem zweiten Extruder zugeführt wird, danach die mit Treibmittel beladene Schmelze in dem zweiten Extruder gekühlt wird.

Nach jedem der vorhergehenden Ausführungsbeispiele kann der statische Mischer Einbauelemente aufweisen, die in die Schmelze eingreifen und über welche die Schmelze gekühlt oder beheizt werden kann. Insbesondere kann die Schmelze durch einen statischen Mischer geführt werden, bevor die Schmelze in den ringförmigen Kanal eintritt. Das heisst, dieser statische Mischer ist stromaufwärts des ringförmigen Kanals angeordnet, wobei stromaufwärts sich auf die Fliessrichtung der Polymerschmelze bezieht.

Nach einem Ausführungsbeispiel kann im Ringkanal ein Temperaturausgleich erfolgen, wobei die Schmelze durch einen dynamischen Mischer, einen statischen Mischer, einen Wärmetauscher oder eine Transferleitung, die insbesondere als beheizbares oder kühlbares Rohrelement ausgebildet sein kann, oder durch eine Kombination von zumindest zwei der vorgenannten Vorrichtungen geführt wird, bevor sie in den Ringkanal eintritt oder während sie den Ringkanal durchströmt. Insbesondere wird eine Vorrichtung nach einem der vorherigen Ausführungsbeispiele für die Herstellung eines ringförmigen geschäumten Extrudats verwendet. Dieser statische Mischer kann derart ausgebildet sein, dass die Mischelemente gleichzeitig als Halteelemente ausgebildet sind.

Vorteilhafterweise liegt die niedrigste und höchste Temperatur im Schmelzequerschnitt nach dem statischen Mischer um weniger als 5 Grad Celsius auseinander, bevorzugt um weniger als 3 Grad Celsius auseinander, besonders bevorzugt um weniger als 1.5 Grad Celsius auseinander.

In einer zweiten Stufe des Extruders kann ein gasförmiges oder flüssiges Treibmittel zugegeben und eingelöst werden. Im Anschluss wird die mit Treibmittel beladene Schmelze in einen Ringkanal geleitet, wobei die Schmelze vor oder in diesem Ringkanal gemischt und/oder gekühlt werden kann. Die den Extruder verlassende Schmelze wird vorteilhafterweise durch einen statischen Mischer geführt. Ein derartiger statischer Mischer kann als ringförmiger Hohlkörper ausgebildet sein, in dessen Innenraum ortsfeste Einbauten angeordnet sind. Der ringförmige Hohlkörper hat einen kreisförmigen Querschnitt oder mehreckigen Querschnitt, wenn er vor dem Ringkanalerzeuger angeordnet ist und eine dem Ringkanal angepasste Form, wenn er im Ringkanal oder Ringspalt angeordnet ist. Durch die Einbauten wird die Strömung gestört, wodurch es zu einer Durchmischung kommt. In der Regel tritt die Schmelze in den statischen Mischer mit einem Temperaturgradienten ein. Die Kerntemperatur der Schmelze entspricht nicht der Wandtemperatur an der Innenwand des ringförmigen Hohlkörpers. Durch die Mischvorgänge im Innenraum des statischen Mischers wird die Temperatur der Schmelze über den ganzen Querschnitt vergleichmässigt.

Der Ringkanal kann in eine Ringdüse münden, sodass die Schmelze über die Ringdüse ausgetragen werden kann. Wenn die Schmelze als eine schäumbare Kunststoffschmelze ausgebildet ist, schäumt die Schmelze am Düsenaustritt oder im Anschluss an die Austrittsöffnung der Düse auf. Daraufhin wird das Extrudat bis zur Erstarrung weiter gekühlt.

Insbesondere kann der Kunststoffschmelze ein Treibmittel zugegeben werden, sodass eine mit Treibmittel beladene Schmelze erhalten wird. Diese mit Treibmittel beladene Schmelze kann beispielsweise, wie in EP2865503 A1 beschrieben, einem zweiten Extruder zugeführt werden. Die mit Treibmittel beladene Schmelze kann in dem zweiten Extruder gekühlt werden. Nach Verlassen des zweiten Extruders kann die Schmelze durch einen statischen Mischer geführt werden. Insbesondere kann ein statischer Mischer gewählt werden, mittels welchem die Temperatur der Schmelze über den ganzen Querschnitt homogenisiert werden kann. Nach einem Ausführungsbeispiel kann der statische Mischer gekühlt und/oder beheizt werden, sodass eine temperaturstabilisierte gekühlte Schmelze erhältlich ist. Die temperaturstabilisierte gekühlte Schmelze kann über ein Düsenelement ausgetragen werden. Unter temperaturstabilisierter Schmelze wird hierbei eine Schmelze verstanden, die eine gleichmässige Temperatur, gemessen über den Schmelzequerschnitt, aufweist.

Das Treibmittel kann in der Schmelze durch Misch- und Dispergiervorgänge im ersten Extruder und/oder einem statischen Mischer und/oder einer Transferleitung zwischen erstem und einem zweitem Extruder und/oder im zweiten Extruder gelöst werden.

Es hat sich gezeigt, dass zum Erreichen einer guten Schaumqualität neben der Temperaturhomogenisierung der Schmelze vor der Düse auch eine exakte Temperaturführung entscheidend ist. Zudem muss die Schmelzetemperatur, das heisst die Temperatur der Schmelze zum Erreichen von sehr niederen Schaumdichten vielfach sehr tief gehalten werden. Mit den gemäss Stand der Technik eingesetzten statischen Mischern nach dem zweiten Extruder können zwar die Temperaturinhomogenitäten, die typischerweise nach dem zweiten Extruder vorhanden sind, ausgeglichen werden. Die statischen Mischer eignen sich aber in nur sehr begrenztem Ausmass zur Beeinflussung der Temperatur, da mit ihnen nicht effizient gekühlt oder geheizt werden kann. Zudem bewirkt der Einsatz von statischen Mischern je nach der gewählten Bauart einen Temperaturanstieg der Schmelze bedingt durch den Druckverlust im Mischer. Der hierdurch verursachte Staudruck wird auf den zweiten Extruder ausgeübt und durch entsprechend höhere Friktion im Extruder kompensiert. Friktion führt zur Erzeugung von Wärme, was einen Temperaturanstieg der Schmelze zur Folge hat. Ein Temperaturanstieg der Schmelze ist aber in vielen Fällen unerwünscht, da dadurch niedrige Schaumdichten nicht erreicht werden können. Unter einer niedrigen Schaumdichte wird ein Schaum mit einer Dichte von weniger als 50%, vorzugsweise weniger als 20%, besonders bevorzugt weniger als 10% bezogen auf die Dichte einer ungeschäumten Polymerschmelze verstanden.

Eine exakte Temperaturführung im Austritt des zweiten Extruders ist vielfach sehr schwierig, da die Schmelze im zweiten Extruder mit hohen treibenden Temperaturdifferenzen um typischerweise 20 bis über 80 Grad Celsius gekühlt werden muss. Entsprechend ist eine Regelung der Austrittstemperatur im Bereich von plus / minus 1 bis 4 Grad Celsius sehr schwierig. Dazu ist auch noch zu berücksichtigen, dass die Schmelzetemperatur im Austritt vom zweiten Extruder über den Querschnitt gesehen vielfach sehr inhomogen ist. Die Temperaturunterschiede zwischen einer wandnahen Zone der Polymerschmelze und einem zentralen Bereich können bis zu 30°C betragen. Unter zentralem Bereich wird ein Bereich verstanden, der einem rotationssymmetrischen Körper entspricht, der um die Mittenachse des Extruders angeordnet ist und sich bis zu einem Drittel des Abstands zwischen Mittenachse und Innenwand des Extruders oder des statischen Mischers erstreckt.

Zudem können Veränderungen im Prozess zum Beispiel die Bildung von Ablagerungen im zweiten Extruder oder die Veränderung der Qualität des eingesetzten Kunststoffrohmaterials zu zeitlichen Veränderungen des Temperaturprofils führen. Sowohl die durch die statischen Mischer verursachten Temperaturveränderungen wie auch die zeitlichen prozessbedingten Temperaturveränderungen können mit dem Verfahren gemäss Stand der Technik nicht mehr kompensiert werden und führen vielfach zu schlechten und oder sich verändernden Schaumqualitäten.

Der statische Mischer kann zudem gleichzeitig über ein Wärmeträgermedium gekühlt oder erwärmt werden, um so die Schmelze auf die optimale Verarbeitungstemperatur zu bringen. Diese Temperierung kann zum Beispiel von aussen über einen Doppelmantel erfolgen, der vom Wärmeträgermedium durchströmt wird. Als Wärmeträgermedium sind zum Beispiel Flüssigkeiten wie Wasser oder Öle geeignet. Es können aber auch andere Flüssigkeiten oder Gase wie Luft eingesetzt werden. Es hat sich aber gezeigt, dass speziell bei höheren Schmelzedurchsätzen von mindestens 50 kg/h eine Temperierung von aussen nur eine bedingte Wirksamkeit aufweist, da die Temperieroberfläche im Verhältnis zum Mischervolumen zu klein ist. Bei grösseren Schmelzedurchsätzen wird das Wärmeträgermedium daher bevorzugt durch zumindest einen Teil der Einbauten des statischen Mischers geleitet, die in den Schmelzestrom eingreifen, um die Temperieroberfläche zu erhöhen. Die Einbauten für das Wärmeträgermedium werden bevorzugt derart angeordnet, dass die Schmelze nicht in Teilströme aufgeteilt wird, sondern als Ganzes kontinuierlich über den ganzen Querschnitt gemischt wird. Die Einbauelemente können beispielsweise ringförmige, stabförmige oder flächige, beispielsweise flügelartige Stegelemente umfassen.

Vorteilhafterweise kann bereits zwischen dem ersten und zweiten Extruder ein Temperaturausgleich und oder eine Vorkühlung der Schmelze erfolgen, wobei die Schmelze durch einen dynamischen Mischer, einen statischen Mischer, einen Wärmetauscher oder eine Transferleitung, die insbesondere als beheizbares oder kühlbares Rohrelement ausgebildet sein kann, oder durch eine Kombination von zumindest zwei der vorgenannten Vorrichtungen geführt wird.

Es hat sich gezeigt, dass sich ein statischer Mischer besonders gut eignet, der eine erste Gruppe von Stegelementen sowie eine zweite Gruppe von Stegelementen umfasst, wobei die erste Gruppe von Stegelementen sich entlang einer gemeinsamen ersten Konusfläche erstreckt und die zweite Gruppe von Stegelementen sich entlang einer zweiten gemeinsamen Konusfläche erstreckt. Mittels dieses statischen Mischers kann die Temperatur besonders gut über den ganzen Querschnitt ausgeglichen werden. Als eingreifende Einbauelemente für die Schmelzetemperierung können beliebig geformte Einbauelemente verwendet werden, wie zum Beispiel Rohre oder Kanäle enthaltende Stegelemente die parallel zur Fliessrichtung angeordnet sind oder auch Einbauelemente, die in einem Winkel zur Schmelzeströmung angeordnet sind. Der Winkel zwischen der Fliessrichtung und der Zentralachse des Einbauelements kann insbesondere als spitzer Winkel oder als komplementärer stumpfer Winkel ausgebildet sein. Unter eingreifenden Einbauelementen sollen hiermit Einbauelemente verstanden werden, die in die Schmelze hineinragen. Ein derartiges Einbauelement ist daher ein die Strömung störender Körper, welcher der Schmelze lokal eine Richtungsänderung aufzwingt.

Eine oder mehrere Gruppen von Stegelementen können mit dem Mantelelement verbunden sein. Es hat sich gezeigt, dass es besonders vorteilhaft ist, die eingreifenden Einbauelemente für die Schmelzetemperierung mit den im statischen Mischer angeordneten Einbauelementen zu kombinieren. So können zum Beispiel zumindest zwei sich kreuzende Gruppen von Stegelementen oder Rohrelementen eingesetzt werden, durch die ein Wärmeträgermedium fliesst. Alternativ dazu können Stegelemente vorgesehen sein, die Hohlräume für die Durchführung von Kabeln oder zum Einbau von Heizelementen enthalten. Die sich kreuzenden Stegelement- oder Rohrelementgruppen sind über eine Kopfplatte gehalten und können aus dem sie umhüllenden Mischerrohr ausbaubar sein. Mit diesen Mischern können sehr hohe Wärmeaustauschflächen realisiert werden. Mindestens ein Teil der Stegelemente kann Kanäle aufweisen, wobei die Kanäle sich von einem ersten Ende des Stegelements zu einem zweiten Ende des Stegelements erstrecken, wobei das Mantelelement je einen korrespondierenden Kanal enthält, der mit dem ersten Ende und zweiten Ende des Stegelements in fluidleitender Verbindung steht.

Mindestens ein Teil der Stegelemente weist Kanäle auf, wobei die Kanäle sich von einem ersten Ende des Stegelements zu einem zweiten Ende des Stegelements erstrecken. Das Mantelelement enthält je einen korrespondierenden Kanal, der mit dem ersten Ende und zweiten Ende des Stegelements in fluidleitender Verbindung steht. Solche temperierbaren statischen Mischer zeichnen sich durch eine sehr gute Mischwirkung und gleichzeitig auch eine sehr hohe Kühlleistung respektive Heizleistung aus. Da durch den statischen Mischer gleichzeitig auch die Temperierung übernommen wird, sind keine zusätzlichen Einbauten wie zum Beispiel parallel zur Fliessrichtung angeordnete Rohre für das Temperieren erforderlich, die den Mischprozess allenfalls stören können.

Es hat sich gezeigt, dass durch den Einsatz des statischen Mischers nach einem der vorhergehenden Ausführungsbeispiele eine Verbesserung der Schaumstruktur erreicht werden kann, wobei Schäume mit sehr gleichmässigen Zellstrukturen, tiefer, also niedriger, Schaumdichte und enger Zellgrössenverteilung erhältlich sind. Dank der gleichmässigen Zellstruktur sind auch die physikalischen Eigenschaften wie Reissfestigkeit, Zugfestigkeit oder der Isolationswert verbessert. Auch kann eine eingestellte Schaumstruktur über die Zeit konstant gehalten werden, da unterschiedliche Temperaturbedingungen vom Extruder ausgeglichen werden können.

Es hat sich ferner gezeigt, dass es sehr vorteilhaft ist, die Schmelzetemperatur über den kühl- und heizbaren statischen Mischer zu regeln. Hierzu wird vorteilhafterweise die Schmelzetemperatur stromabwärts des statischen Mischers zum Beispiel im Auslassbereich desselben oder in der Ringdüse gemessen und über Kühlen oder Heizen des statischen Mischers auf einer einstellbaren Solltemperatur gehalten. Hierdurch kann eine bestimmte Temperatur auch bei sich ändernden Prozessbedingungen eingehalten werden, womit eine gleichbleibende Schaumqualität erzielbar ist.

Eine über einen Querschnitt der Schmelze im Wesentlichen homogene Temperaturverteilung hat den Vorteil, dass die Zellgrössenverteilung über den ganzen Querschnitt des Extrudates vergleichmässigt wird. Bedingt durch die geringere Streuung der Zellgrösse in dem Querschnitt ergibt sich ein homogener Zellenaufbau, was zu einem Kunststoffkörper mit einem definierten Eigenschaftsprofil führt. Insbesondere weicht die mittlere Zellgrösse eines Breitenabschnittes von 20% der Gesamtbreite der extrudierten Folie oder Platte um weniger als 20% und vorzugsweise um weniger als 10% von den mittleren Zellgrössen der weiteren Breitenabschnitte ab. Bei der Herstellung von ringförmigen Extrudaten, die zu Produkten verarbeitet werden, welche zur thermischen Isolation verwendbar sind, beträgt der Anteil an offenen Zellen insbesondere weniger als 15%, vorzugsweise weniger als 10%, besonders bevorzugt weniger als 5% der gesamten Anzahl der Zellen. Bei der Herstellung von anderen ringförmigen Extrudaten wird ein möglichst konstanter Anteil von offenen Zellen von zum Beispiel 40% bis einschliesslich 70% gewünscht. Bei solchen Produkten weicht der Anteil der offenen Zellen eines Breitenabschnittes von 20% der Gesamtbreite der extrudierten Folie oder Platte um weniger als 20% und vorzugsweise um weniger als 10% vom mittleren Prozentsatz der offenen Zellen von den weiteren Breitenabschnitten ab.

Das erfindungsgemässe Verfahren kann für die Herstellung von niederdichten Schäumen aus beliebigen Polymeren eingesetzt werden, es eignet sich aber speziell für Polystyrol, Polypropylen, Polyethylen, Polyethylenterephthalat, Polyvinylchlorid, Polyacrylnitril, Polyamid, Polyester, Polyacrylat, Polylacticacid (PLA) sowie andere Biopolymere oder Mischungen davon. Als Treibmittel kommen beliebige Flüssigkeiten, Gase oder auch Feststoffe, die Gase abspalten oder Gemische von Treibmitteln zum Einsatz. Speziell eignen sich Ether, Kohlenwasserstoffe, Ketone, Ester, Wasser, Kohlendioxyd oder Stickstoff als Treibmittel.

Insbesondere kann das Düsenelement am Austrittsende der Schmelzeströmung aus dem Ringspalt als Ringdüse ausgebildet sein. Ein Treibmittel kann mittels einer Treibmittelzugabevorrichtung zumindest einem der ersten oder zweiten Extrudern oder der Transferleitung zugegeben werden.

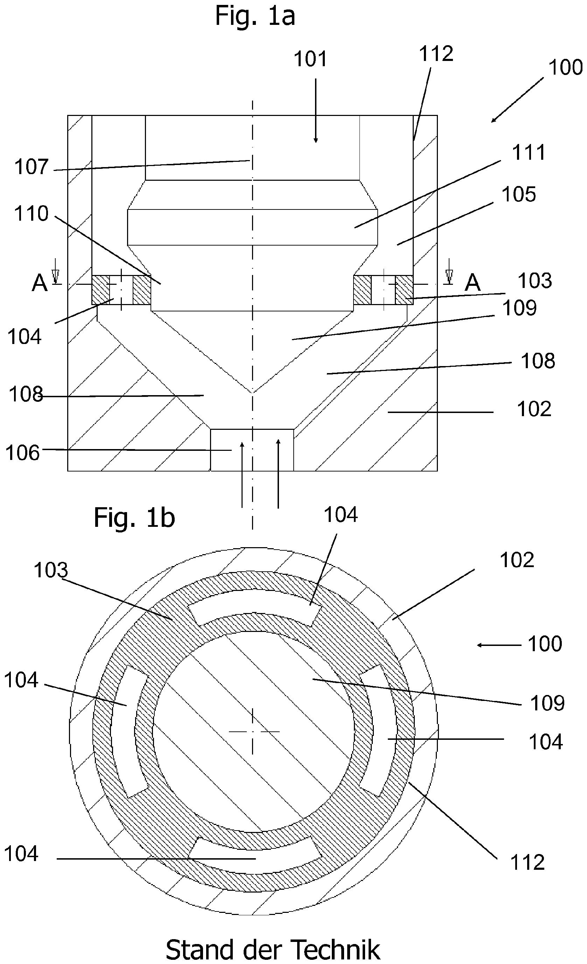

Nachfolgend wird die erfindungsgemässe Vorrichtung anhand einiger Ausführungsbeispiele dargestellt. Es zeigen
Fig. 1a ein zweidimensionales Schnittbild durch ein erstes Ausführungsbeispiel einer Vorrichtung gemäss des Standes der Technik,
Fig. 1b: einen Schnitt A-A der Fig. 1a,
Fig. 2a: ein zweidimensionales Schnittbild durch ein zweites Ausführungsbeispiel einer Vorrichtung gemäss des Standes der Technik,
Fig. 2b: einen Schnitt A-A der Fig. 2a,

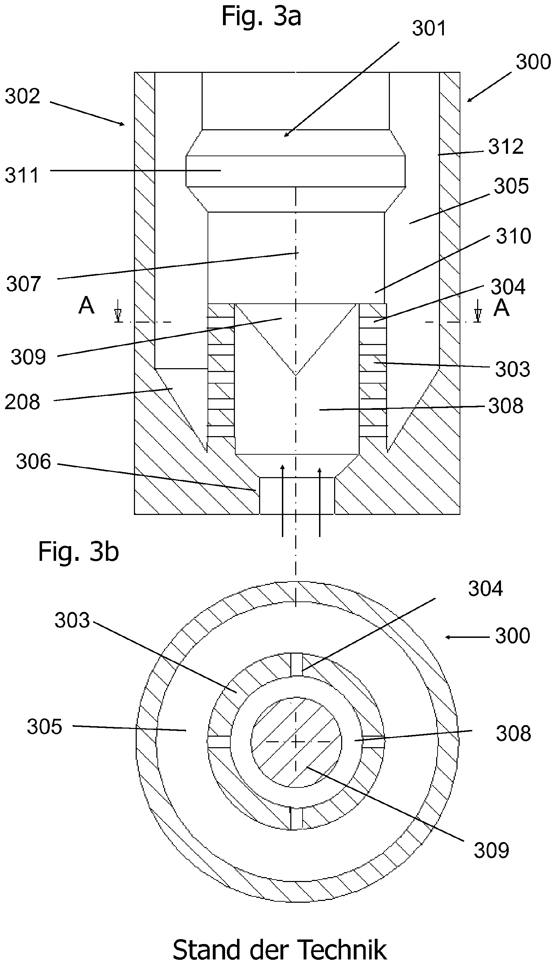

Fig. 3a: ein zweidimensionales Schnittbild durch ein drittes Ausführungsbeispiel einer Vorrichtung gemäss des Standes der Technik,
Fig. 3b: einen Schnitt A-A der Fig. 3a,
Fig. 4a: ein zweidimensionales Schnittbild durch ein viertes Ausführungsbeispiel einer Vorrichtung gemäss des Standes der Technik,
Fig. 4b: einen Schnitt A-A der Fig. 4a,

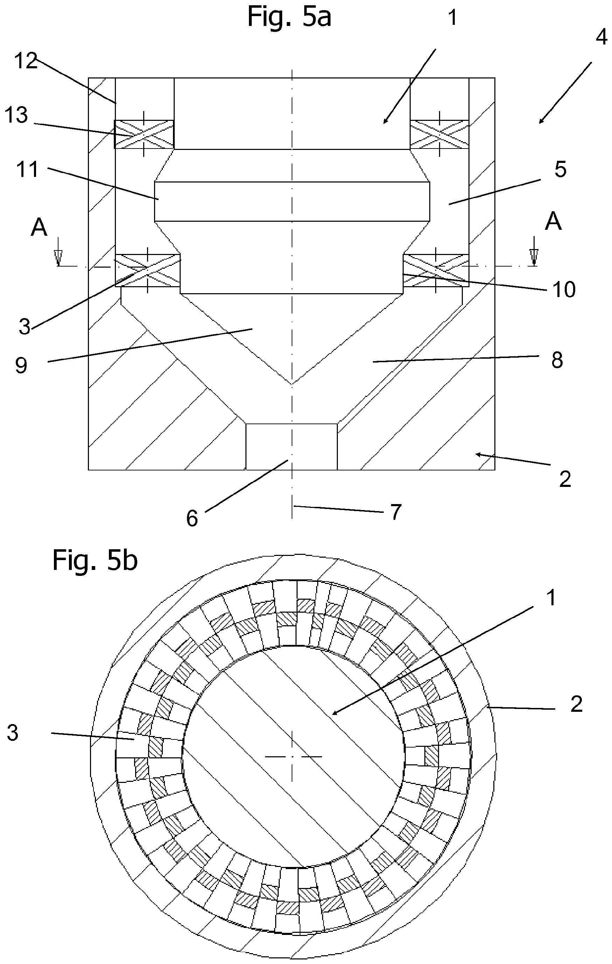

Fig. 5a: ein zweidimensionales Schnittbild eines ersten Ausführungsbeispiels einer erfindungsgemässen Vorrichtung,
Fig. 5b: einen Schnitt A-A der Fig. 5a,

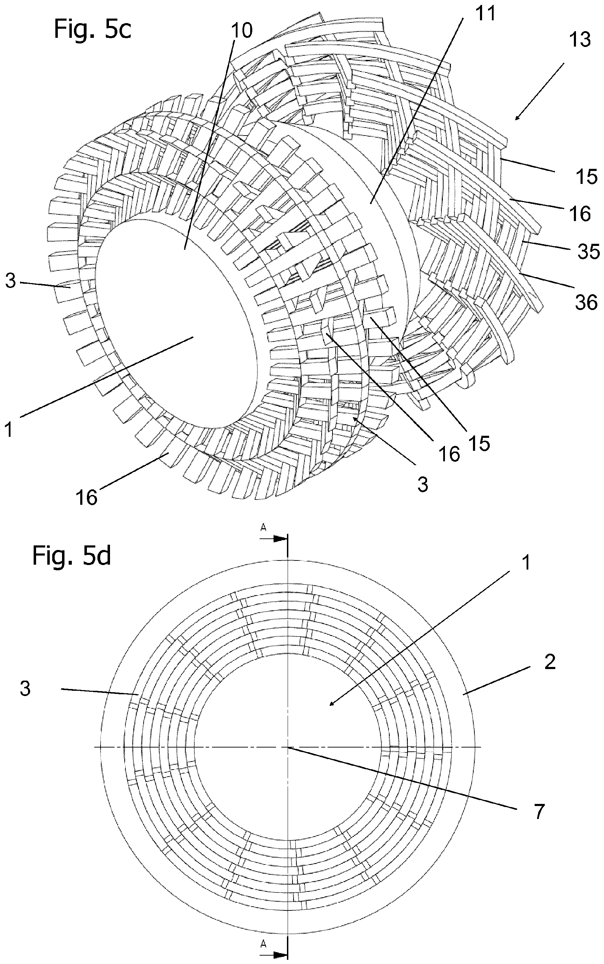

Fig. 5c: eine Variante der Fig. 5a,
Fig. 5d: eine Ansicht auf die Vorrichtung gemäss Fig. 5c in Richtung der Längsachse

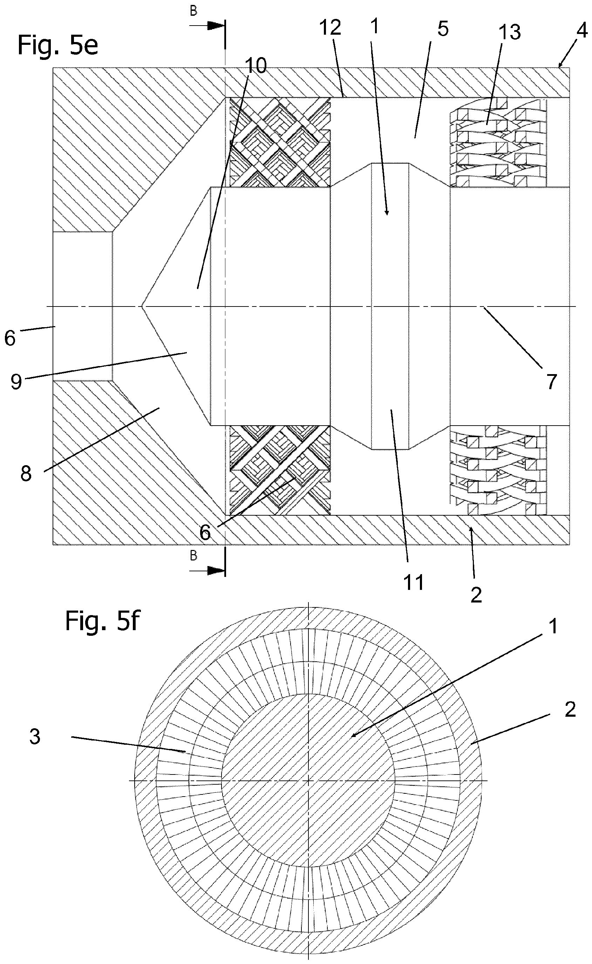

Fig. 5e: einen Schnitt entlang der Schnittlinie A-A durch die Vorrichtung gemäss Fig. 5d,
Fig. 5f: einen Schnitt entlang der Schnittlinie B-B durch die Vorrichtung gemäss Fig. 5e,

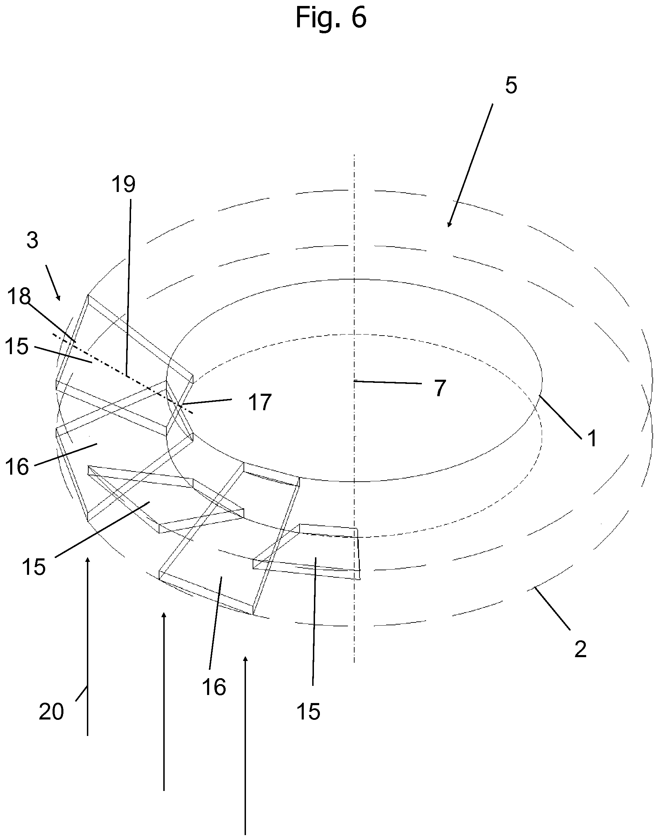

Fig. 6: eine dreidimensionale Darstellung eines zweiten Ausführungsbeispiels einer erfindungsgemässen Vorrichtung,

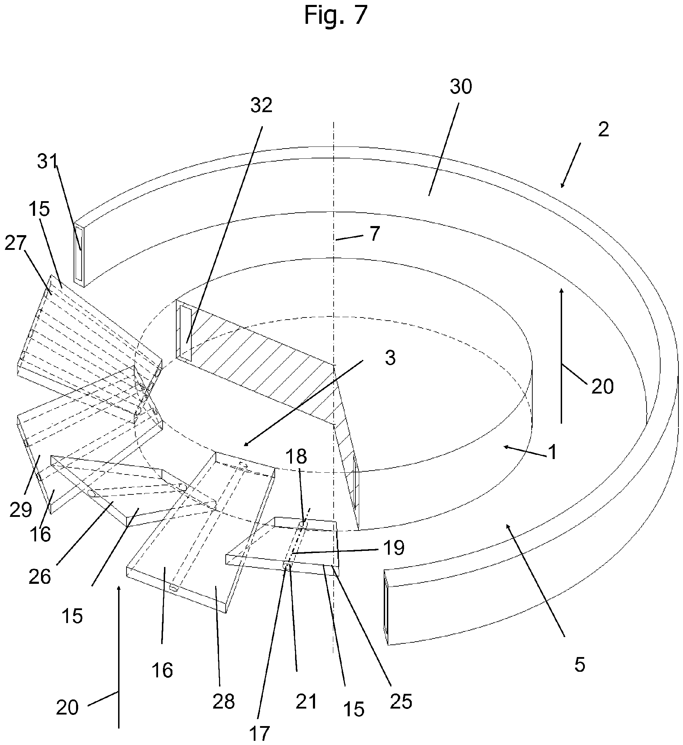

Fig. 7: eine dreidimensionale Darstellung eines dritten Ausführungsbeispiels einer erfindungsgemässen Vorrichtung,

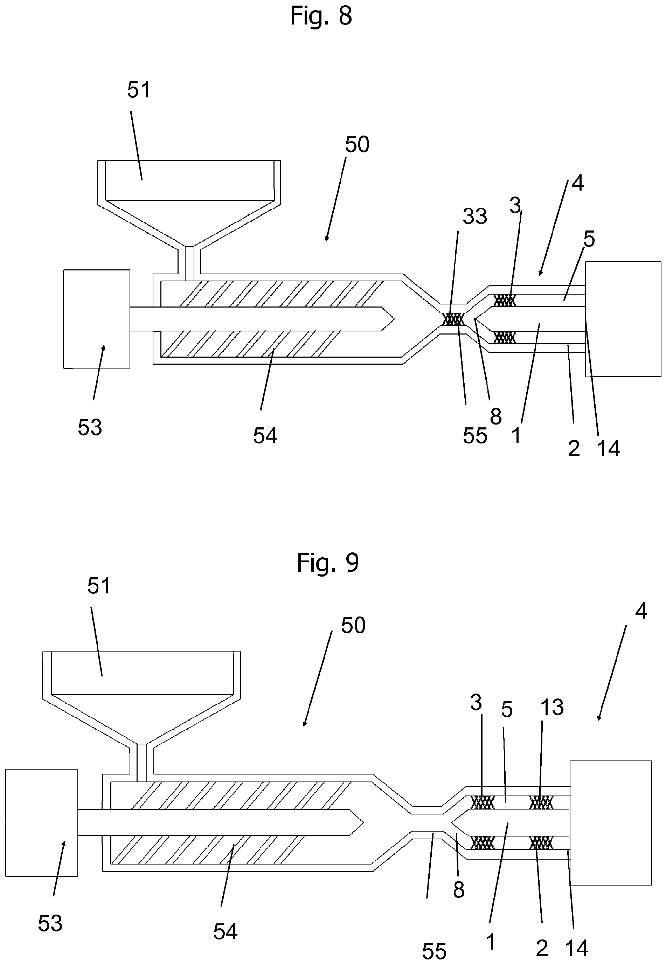

Fig. 8: eine erste Variante einer Extrusionsanlage mit einer erfindungsgemässen Vorrichtung,
Fig. 9: eine zweite Variante einer Extrusionsanlage,

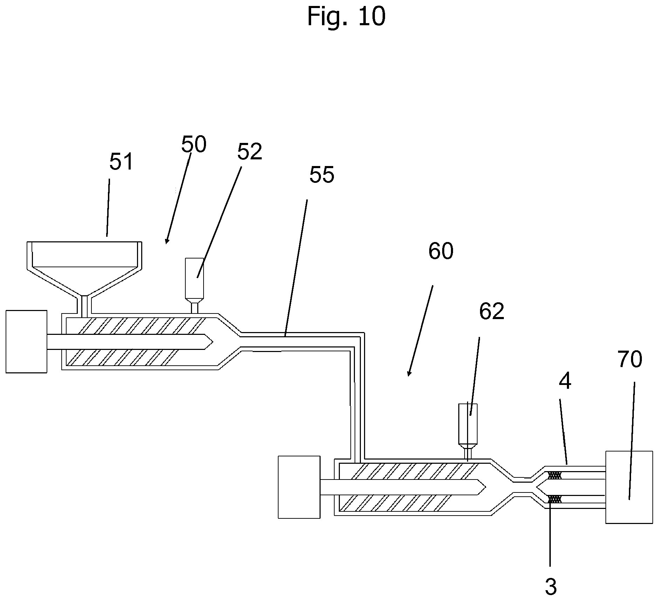

Fig. 10: eine dritte Variante einer Extrusionsanlage.

Gemäss Stand der Technik sind verschiedene Haltesysteme und Umlenkelemente für Vorrichtungen zur Erzeugung von ringförmigen Extrudaten bekannt. Fig. 1a und Fig. 1b zeigen einen Stegplattendornhalter oder Lochplattendornhalter, die als erste vorbekannte Ausführungsbeispiele für eine Vorrichtung 100 zur Herstellung eines ringförmigen Extrudats beschrieben werden sollen. Stromaufwärts des Stegplattendornhalters ist ein in der vorliegenden Darstellung nicht gezeigter Extruder angeordnet. Der Stegplattendornhalter besteht aus einem Dornelement 101 und aus einem Mantelelement 102 und einen Einsetzelement 103. Das Dornelement 101 wird vom Einsetzelement 103 im Mantelelement 102 gehalten. Das Einsetzelement 103 enthält mindestens eine Öffnung 104, sodass die Kunststoffschmelze durch diese Öffnung in den Ringkanal 105 eintritt. Die Kunststoffschmelze gelangt über eine Eintrittsöffnung 106 vom Extruder in das Mantelelement 102. Die Eintrittsöffnung 106 ist in Fig. 1a rotationssymmetrisch um die Längsachse 107 des Mantelelements 102 angeordnet. Ausgehend von der Eintrittsöffnung 106 wird die Kunststoffschmelze in einen Konusverteiler 108 geleitet. Der Konusverteiler umgibt den Konus 109 des Dornelements 101. Im vorliegenden Ausführungsbeispiel schliesst an den Konus 109 ein zylinderförmiger Abschnitt 110 an, welcher das Einsetzelement 103 hält. Stromabwärts des Einsetzelements weist das Dornelement 101 eine Erweiterung 111 auf. Da die Innenwand 112 des Mantelelements 102 stromabwärts des Einsetzelements 103 zylindrisch ausgebildet ist, kommt es durch die Erweiterung 111 zu einer Verringerung des Strömungsquerschnitts. An dieser Stelle erfolgt eine Vergleichmässigung der Strömungsgeschwindigkeit über den gesamten Umfang des Ringkanals 105, weil die gesamte Kunststoffschmelze diese Verengung passieren muss. Allerdings kann die Schmelze bedingt durch örtliche Temperaturschwankungen örtlich eine unterschiedliche Zähigkeit aufweisen, sodass Schwankungen in der Fliessgeschwindigkeit mit der Vorrichtung gemäss Fig. 1a nicht vollständig ausgeschlossen werden können.

In Fig. 1b ist der Schnitt entlang der Ebene A-A der Fig. 1a gezeigt. Der Schnitt verläuft somit durch das Einsetzelement 103. Das Einsetzelement 103 enthält gemäss der vorliegenden Ausführungsform vier gleichartige Öffnungen. Nach einem nicht dargestellten Ausführungsbeispiel kann auch eine Mehrzahl von Öffnungen mit kreisförmigem Querschnitt vorgesehen sein. Das Einsetzelement 103 ist im Mantelelement 102 aufgenommen und umschliesst den Konus 109. Mittels des Einsetzelements 103 kann das Dornelement 101 im Innenraum des Mantelelements 102 gehalten werden. Durch das Einsetzelement 103 ist auch eine Zentrierung des Dornelements 101 im Mantelelement 102 möglich, insbesondere an dem Ende, welches den Konus 109 enthält. Allerdings hat sich in diesem Ausführungsbeispiel als nachteilig erwiesen, dass die Schmelze eine lange Wegstrecke strömen muss, bis das Strömungsprofil gleichmässig ist. Durch die Umlenkung der Strömung durch die Öffnungen 104 wird eine Strömung mit ausgeprägtem Strömungsprofil erhalten, welche durch die Erweiterung 111 des Dornelements und die damit verbundene Verengung des Ringkanals 105 über eine beträchtliche Strecke erhalten bleibt. Wenn eine Schmelze mit einem derartig ausgeprägten Strömungsprofil, das heisst einer Abweichung der minimalen Geschwindigkeit und/oder der maximalen Geschwindigkeit um mehr als 20% von der Durchschnittsgeschwindigkeit, aus dem Mantelelement austritt kann dies zu Qualitätsproblemen führen. Das Extrudat kann beispielsweise eine inhomogene Oberfläche, Fehlstellen oder Schlieren enthalten, was die Verwendung von Anordnungen von Dornelementen gemäss Fig. 1a oder Fig. 1b in vielen Fällen verunmöglicht.

Daher wurden alternative Vorrichtungen zur Herstellung eines ringförmigen Extrudats entwickelt, beispielhaft soll hierfür das Ausführungsbeispiel gemäss Fig. 2a oder Fig. 2b angeführt sein. Diese Vorrichtung ist auch unter dem Namen Wendelverteiler bekannt. Bei einem Wendelverteiler wird der Massestrom typischerweise seitlich in zwei Teilströmen an einer Halterung 203 vorbei gelenkt, die das Dornelement 201, welches das Innenteil ausbildet, mit dem ein Aussenteil ausbildenden Mantelelements 202 verbindet. Danach werden die Teilströme über gewindeartige Wendeln auf den Ringkanal 205 verteilt. Der Wendelverteiler besteht aus einem Dornelement 201 und aus einem Mantelelement 202 und einer Halterung 203. Das Mantelelement 202 weist zwei Mantelelementabschnitte auf. Der erste Mantelelementabschnitt 212 erstreckt sich von der Ausgangsöffnung des Extruders bis zur Halterung 203. Der zweite Mantelelementabschnitt 222 erstreckt sich von der Halterung 203 bis zum Austrittsende des Mantelelements 202. Der erste Mantelelementabschnitt 212 enthält einen ersten Verteilerkanal 208 und einen zweiten Verteilerkanal 218. Die Kunststoffschmelze gelangt über eine Eintrittsöffnung 206 vom Extruder den ersten Mantelelementabschnitt 212. Die Eintrittsöffnung 206 ist in Fig. 2a rotationssymmetrisch um die Längsachse 207 des Mantelelements 202 angeordnet. Ausgehend von der Eintrittsöffnung 206 wird die Kunststoffschmelze in den ersten Verteilkanal 208 und den zweiten Verteilkanal 218 geleitet.

Im vorliegenden Ausführungsbeispiel schliesst an den ersten Mantelelementabschnitt 212 die Halterung 203 an. Die Halterung 203 dient der Aufnahme des Dornelements 201. An die Halterung 203 schliesst ein zylinderförmiger Abschnitt an, welcher als zweiter Mantelelementabschnitt 222 bezeichnet wird. Im Innenraum des zweiten Mantelelementabschnittes 222 erstreckt sich das Dornelement 201, so dass zwischen dem zweitem Mantelelementabschnitt 222 und dem Dornelement 201 ein Ringkanal 205 ausgebildet wird.

Stromabwärts der Halterung 203 weist das Dornelement 201 eine Wendel 211 auf. Da die Innenwand des zweiten Mantelelementabschnitts 222 stromabwärts der Halterung 203 zylindrisch ausgebildet ist, kommt es durch die Wendel 211 zu einer Vergrösserung und anschliessender Verringerung des Strömungsquerschnitts. An dieser Stelle erfolgt eine Vergleichmässigung der Strömungsgeschwindigkeit über den gesamten Umfang des Ringkanals 205, weil die gesamte Kunststoffschmelze entlang der Wendel 211 vorwärts geschoben werden muss. Während dieser Vorschubbewegung kann die Schmelze bedingt durch örtliche Temperaturschwankungen örtlich eine unterschiedliche Zähigkeit aufweisen, sodass Schwankungen in der Fliessgeschwindigkeit auch mit der Vorrichtung gemäss Fig. 2a nicht vollständig ausgeschlossen werden können. Zudem muss sich die zähflüssige Kunststoffschmelze nach dem Austritt aus den Verteilerkanälen 208, 218 auf den gesamten Querschnitt des Ringkanals 205 verteilen. Diese Verteilung bedingt eine zeitliche Verzögerung, wodurch die Schmelze abkühlen kann, insbesondere wenn keine zusätzlichen Heizvorrichtungen vorgesehen sind. Eine Abkühlung der Schmelze wirkt sich nachteilig auf das Fliessverhalten aus und kann am Austritt des Ringkanals zu einem inhomogenen Schmelzestrom führen, wodurch die Produktqualität der Kunststoffbahnen oder der Kunststofffolie beeinträchtigt werden kann.

In Fig. 2b ist der Schnitt entlang der Ebene A-A der Fig. 2a gezeigt. Der Schnitt verläuft somit durch die Halterung 203. Die Halterung 203 enthält gemäss der vorliegenden Ausführungsform eine zentrale Öffnung, in welche ein erstes Ende 209 des Dornelements 201 aufgenommen ist. Der zweite Mantelelementabschnitt 222 ist in der Halterung 203 aufgenommen und umgibt das sich vom ersten Ende 209 erstreckende Dornelement 201. Der erste Verteilerkanal 208 und der zweite Verteilerkanal 218 setzen sich im Inneren des Dornelements 201 fort und münden in den Ringkanal 205, der von der äusseren Oberfläche des Dornelements 201 und der Innenwand des zweiten Mantelelementabschnitts 222 gebildet wird. In Figur 2a sind eine erste Mündungsöffnung 213 und eine zweite Mündungsöffnung 223 des entsprechenden Verteilerkanals 208, 218 gezeigt.

Durch die Halterung 203 ist eine Zentrierung des Dornelements 201 im Mantelelement 202 ermöglicht, insbesondere an dessen ersten Ende 209. Allerdings hat sich auch in diesem Ausführungsbeispiel als nachteilig erwiesen, dass die Schmelze eine lange Wegstrecke strömen muss, bis das Strömungsprofil gleichmässig ist. Durch die Umlenkung der Strömung durch die Wendel 211 wird eine Strömung mit ausgeprägtem Strömungsprofil erhalten, welche durch die Erweiterung 211 des Dornelements 201 und die damit verbundene ringförmige Erweiterung und gleichzeitiger axiale Verengung des Ringkanals 205 über eine beträchtliche Strecke erhalten bleibt. Wenn eine Schmelze mit einem derartig ausgeprägten Strömungsprofil, das heisst einer Abweichung der minimalen Geschwindigkeit und/oder der maximalen Geschwindigkeit um mehr als 20% von der Durchschnittsgeschwindigkeit, aus dem Mantelelement austritt, kann dies zu Qualitätsproblemen führen. Das Extrudat kann beispielsweise eine inhomogene Oberfläche, Fehlstellen oder Schlieren enthalten, was die Verwendung von Anordnungen von Dornelementen gemäss Fig. 2a oder Fig. 2b in vielen Fällen, insbesondere für Schmelzeströme mit grösseren Unterschieden in der Zähigkeit verunmöglicht.

Des Weiteren sind als Vorrichtungen 300 zur Herstellung eines ringförmigen Extrudats auch Siebkorbhalterungen gemäss Fig. 3a oder Fig. 3b bekannt. In diesem Ausführungsbeispiel besteht die Halterung 303 aus einem Siebkorb, der das Innenteil, das als Dornelement 301 ausgebildet ist, von hinten mit dem als Aussenteil ausgebildeten Mantelelement 302 verbindet. Die Vorrichtung 300 besteht aus einem Dornelement 301, aus einem Mantelelement 302 und einem Einsetzelement 303. Das Dornelement 301 wird vom Einsetzelement 303 im Mantelelement 302 gehalten. Das Einsetzelement 303 enthält mindestens eine Öffnung 304, sodass die Kunststoffschmelze durch diese Öffnung 304 in den Ringkanal 305 eintritt. Die Kunststoffschmelze gelangt über eine Eintrittsöffnung 306 vom Extruder in das Mantelelement 302. Die Fliessrichtung der Kunststoffschmelze ist durch die im Inneren der Eintrittsöffnung 306 angeordneten Pfeile angedeutet. Die Eintrittsöffnung 306 ist in Fig. 3a rotationssymmetrisch um die Längsachse 307 des Mantelelements 302 angeordnet. Ausgehend von der Eintrittsöffnung 306 wird die Kunststoffschmelze in einen Verteilerkanal 308 geleitet. Vom Verteilerkanal 308 gelangt die Kunststoffschmelze über die Öffnungen 304 des Einsetzelements 303 in den Ringkanal 305.

Das erste Ende des Dornelements 301 ist als Konus 309 ausgebildet. Im vorliegenden Ausführungsbeispiel schliesst an den Konus 309 ein zylinderförmiger Abschnitt 310 an. Stromabwärts des zylindrischen Abschnitts 310 weist das Dornelement 301 eine Erweiterung 311 auf. Da die Innenwand 312 des Mantelelements 302 stromabwärts des Einsetzelements 303 zylindrisch ausgebildet ist, kommt es durch die Erweiterung 311 zu einer Verringerung des Strömungsquerschnitts. An dieser Stelle erfolgt eine Vergleichmässigung der Strömungsgeschwindigkeit über den gesamten Umfang des Ringkanals 305, weil die gesamte Kunststoffschmelze diese Verengung passieren muss. Allerdings kann die Schmelze bedingt durch örtliche Temperaturschwankungen örtlich eine unterschiedliche Zähigkeit aufweisen, sodass Schwankungen in der Fliessgeschwindigkeit auch mit der Vorrichtung gemäss Fig. 3a nicht vollständig ausgeschlossen werden können.

Eine weitere vorbekannte Vorrichtung 400 zur Herstellung eines ringförmigen Extrudats ist in Fig. 4a oder Fig. 4b dargestellt. Diese Vorrichtung ist auch unter der Bezeichnung Pinolenhalterung bekannt. Die Vorrichtung 400 besteht aus einem Dornelement 401 und aus einem Mantelelement 402 und einer Halterung 403. Der Massestrom, also die Kunststoffschmelze, wird der Vorrichtung 400 von der Seite her zugeführt und breitet sich dann über sich verengende gewindeartige Kanäle auf den Ringquerschnitt aus, wobei kontinuierlich ein Teil des Massestroms über den Kanal abströmt. Die Halterung des Dornelements 401 im Mantelelement 402 erfolgt dabei am ersten Ende des Dornelements 401, sodass die Halterung 403 als flanschartiger Vorsprung des ersten Endes des Dornelements 401 ausgebildet ist. Die Kunststoffschmelze wird typischerweise als Seitenstrom an einer Halterung 403 vorbei gelenkt, die das Dornelement 401, welches das Innenteil ausbildet, mit dem ein Aussenteil ausbildenden Mantelelement 402 verbindet. Danach gelangt der Seitenstrom vom Seitenkanal 408 in einen Verteilerkanal 409, der sich gewindeartig entlang der Oberfläche des Dornelements 401 erstreckt, bis er in den Ringkanal 405 mündet. Ein zweiter derartiger Verteilerkanal kann auf der nicht sichtbaren hinteren Seite des Dornelements 401 angeordnet sein.

Die Kunststoffschmelze gelangt über eine Eintrittsöffnung 406 vom Extruder in ein Basiselement 420. Die Eintrittsöffnung 406 ist in Fig. 4a seitlich an der Aussenwand des Basiselements 420 angeordnet. Ausgehend von der Eintrittsöffnung 406 wird die Kunststoffschmelze in den Seitenkanal 408 geleitet. Der Seitenkanal 408 führt durch die Halterung 403 und mündet in den Boden eines Kanals, der sich des sich entlang der Aussenfläche des Dornelements 401 entlang schraubenden Verteilerkanals 409 erweitert, sodass die durch den Verteilerkanal 409 strömende Kunststoffschmelze nicht nur entlang des sich verengenden Verteilerkanals, sondern auch in Richtung der Längsachse 407 in Richtung des Ringkanals 405 strömen kann. Am Ende des Verteilerkanals 409 schliesst ein zylinderförmiger Abschnitt an, mittels welchem ein ringförmiger Schmelzestrom erhältlich ist, der ein Rohr oder einen Schlauch ausbilden kann, wenn er die Vorrichtung verlässt.

Durch den Verteilerkanal 409 kommt es schrittweise zu einer Vergrösserung des Strömungsquerschnitts. An dieser Stelle erfolgt eine Ausbreitung der Strömung über den Umfang des Dornelements 401. Eine Vergleichmässigung der Strömungsgeschwindigkeit kann erst über den gesamten Umfang des Ringkanals 405 erfolgen, wenn dieser vollumfänglich mit Kunststoffschmelze gefüllt ist. Während dieser Vorschubbewegung im Verteilerkanal 409 kann die Schmelze bedingt durch örtliche Temperaturschwankungen örtlich eine unterschiedliche Zähigkeit aufweisen, sodass Schwankungen in der Fliessgeschwindigkeit auch mit der Vorrichtung gemäss Fig. 4a zu erwarten sind. Zudem muss sich die zähflüssige Kunststoffschmelze nach dem Austritt aus dem Verteilerkanal 409 auf den gesamten Querschnitt des Ringkanals 405 verteilen. Diese Verteilung bedingt eine zeitliche Verzögerung, wodurch die Schmelze abkühlen kann, wenn keine zusätzlichen Heizvorrichtungen vorgesehen sind. Eine Abkühlung der Schmelze wirkt sich wiederum nachteilig auf das Fliessverhalten aus und kann am Austritt des Ringkanals 405 zu einem inhomogenen Schmelzestrom führen, wodurch die Produktqualität der ringförmigen Kunststoffbahnen oder der Kunststofffolie beeinträchtigt werden kann.

In Fig. 4b ist der Schnitt entlang der Ebene A-A der Fig. 4a gezeigt. Der Schnitt verläuft somit durch die Halterung 403. Die Halterung 403 ist als eine flanschartige Erweiterung des ersten Endes des Dornelements 401 ausgebildet. Der Seitenkanal 408 verläuft in dieser Schnittebene achsparallel im Inneren des Dornelements 401 und mündet in den Verteilerkanal 409. Durch die Halterung 403 ist eine Zentrierung des Dornelements 401 im Mantelelement 402 ermöglicht. Allerdings hat sich in diesem Ausführungsbeispiel als nachteilig erwiesen, dass die Schmelze eine lange Wegstrecke strömen muss, bis das Strömungsprofil gleichmässig ist. Durch die Umlenkung der Strömung den Seitenkanal 408 und den daran anschliessenden Verteilerkanal 409 wird eine Strömung mit ausgeprägtem Strömungsprofil erhalten, welches durch die sukzessive Einspeisung in den Ringkanal 405 über eine beträchtliche Strecke erhalten bleibt. Wenn eine Schmelze mit einem derartig ausgeprägten Strömungsprofil, das heisst einer Abweichung der minimalen Geschwindigkeit und/oder der maximalen Geschwindigkeit um mehr als 20% von der Durchschnittsgeschwindigkeit, aus dem Mantelelement austritt, kann dies zu Qualitätsproblemen führen. Das Extrudat kann beispielsweise eine inhomogene Oberfläche, Fehlstellen oder Schlieren enthalten, was die Verwendung von Anordnungen von Dornelementen gemäss Fig. 4a oder Fig. 4b in vielen Fällen, insbesondere für Schmelzeströme mit grösseren Unterschieden in der Zähigkeit verunmöglicht.

Fig. 5a und Fig. 5b zeigen ein Ausführungsbeispiel für eine Vorrichtung 4 zur Herstellung eines ringförmigen Extrudats gemäss der vorliegenden Erfindung. Die Vorrichtung umfasst ein Dornelement 1 und ein Mantelelement 2 sowie einen statischen Mischer 3, der die Funktion eines Halteelements und eines Einsetzelements für das Dornelement 1 übernimmt. Das Dornelement 1 wird somit vom statischen Mischer 3 im Mantelelement 2 gehalten. Die Kunststoffschmelze durchströmt den statischen Mischer und gelangt in den Ringkanal 5. Die Kunststoffschmelze gelangt über eine Eintrittsöffnung 6 vom Extruder in das Mantelelement 2. Die Eintrittsöffnung 6 ist in Fig. 5a rotationssymmetrisch um die Längsachse 7 des Mantelelements 2 angeordnet. Ausgehend von der Eintrittsöffnung 6 wird die Kunststoffschmelze in einen Verteilkanal 8 geleitet. Der Verteilkanal 8 umgibt den Konus 9 des Dornelements 1. Im vorliegenden Ausführungsbeispiel schliesst an den Konus 9 ein zylinderförmiger Abschnitt 10 an, welcher durch den statischen Mischer 3 gehalten wird. Stromabwärts des statischen Mischers 3 weist das Dornelement 1 eine Erweiterung 11 auf. Da die Innenwand 12 des Mantelelements stromabwärts des statischen Mischers 3 zylindrisch ausgebildet ist, kommt es durch die Erweiterung 11 zu einer Verringerung des Strömungsquerschnitts. An dieser Stelle erfolgt eine Vergleichmässigung der Strömungsgeschwindigkeit über den gesamten Umfang des Ringkanals 5, weil die gesamte Kunststoffschmelze diese Verengung passieren muss. Da die Schmelze durch den statischen Mischer homogenisiert wurde, treten gemäss diesem Ausführungsbeispiel keine örtlichen Temperaturschwankungen auf, sodass die Kunststoffschmelze homogen ist, das heisst, eine über den Umfang des Ringkanals einheitliche Zähigkeit aufweist. Hierdurch können Schwankungen in der Fliessgeschwindigkeit im Wesentlichen ausgeschlossen werden, sodass ein Extrudat hoher Qualität erhältlich ist.

Nach dem erfindungsgemässen Verfahren ist ein zweiter statischer Mischer 13 stromabwärts des statischen Mischers 3 im Ringkanal 5 angeordnet. Nicht dargestellt ist eine Variante, gemäss welcher ein statischer Mischer im Eintrittskanal, welcher an die Eintrittsöffnung 6 anschliesst angeordnet ist, und/oder ein statischer Mischer im Verteilkanal angeordnet ist. Nicht dargestellt sind auch zusätzliche Halterungen, die nach einem der vorhergehenden Ausführungsbeispiele ausgebildet sein können.

In Fig. 5b ist der Schnitt entlang der Ebene A-A der Fig. 5a gezeigt. Der Schnitt verläuft somit durch den statischen Mischer 3. Der statische Mischer 3 enthält gemäss der vorliegenden Ausführungsform eine Mehrzahl von Stegelementen, die einer ersten und einer zweiten Stegelementgruppe zugeordnet sind. Der statische Mischer 3 ist im Mantelelement 2 aufgenommen und umschliesst den Konus 9. Mittels des statischen Mischers 3 kann das Dornelement 1 im Innenraum des Mantelelements 2 gehalten werden. Durch Verwendung des statischen Mischers 3 ist auch eine Zentrierung des Dornelements 1 im Mantelelement 2 möglich, insbesondere an dem Ende, welches den Konus 9 enthält. Da die Schmelze unmittelbar am Austritt des statischen Mischers 3 homogenisiert ist, ist das Strömungsgeschwindigkeitsprofil homogen, sodass überraschenderweise die Strömung keine lange Wegstrecke zurücklegen muss und das Dornelement eine Gesamtlänge aufweisen kann, die kleiner als das Vierfache des maximalen Durchmessers des Dornelements beträgt. Die Abweichung der minimalen Strömungsgeschwindigkeit von der maximalen Strömungsgeschwindigkeit beträgt dabei nicht mehr als je 10% von der Durchschnittsgeschwindigkeit, mit welcher die Kunststoffschmelze aus dem Mantelelement austritt. Das Extrudat weist daher beispielsweise keine inhomogene Oberfläche, keine Fehlstellen oder Schlieren auf, sodass eine konstant gute Produktqualität gewährleistet werden kann.

Fig. 5c, Fig. 5d, Fig. 5e sowie Fig. 5f zeigen eine Variante des Ausführungsbeispiels gemäss Fig. 5a oder Fig. 5b für eine Vorrichtung 4 zur Herstellung eines ringförmigen Extrudats gemäss der vorliegenden Erfindung. Die Vorrichtung umfasst ein Dornelement 1 und ein Mantelelement 2 sowie einen statischen Mischer 3, der die Funktion eines Halteelements oder Einsetzelements für das Dornelement übernimmt. Das Dornelement 1 wird somit vom statischen Mischer 3 im Mantelelement 2 gehalten. Die Kunststoffschmelze durchströmt den statischen Mischer 3 und gelangt in den Ringkanal 5 (Siehe Fig. 5e). Die Kunststoffschmelze gelangt über eine Eintrittsöffnung 6 vom Extruder herkommend in das Mantelelement 2. Die Eintrittsöffnung 6 ist in Fig. 5a rotationssymmetrisch um die Längsachse 7 des Mantelelements 2 angeordnet. Ausgehend von der Eintrittsöffnung 6 wird die Kunststoffschmelze in einen Verteilkanal 8 geleitet. Der Verteilkanal 8 umgibt den Konus 9 des Dornelements 1. Im vorliegenden Ausführungsbeispiel schliesst an den Konus 9 ein zylinderförmiger Abschnitt 10 an, welcher durch den statischen Mischer 3 gehalten wird. Stromabwärts des statischen Mischers 3 weist das Dornelement 1 eine Erweiterung 11 auf. Da die Innenwand 12 des Mantelelements stromabwärts des statischen Mischers 3 zylindrisch ausgebildet ist, kommt es durch die Erweiterung 11 zu einer Verringerung des Strömungsquerschnitts. An dieser Stelle erfolgt eine Vergleichmässigung der Strömungsgeschwindigkeit über den gesamten Umfang des Ringkanals 5, weil die gesamte Kunststoffschmelze diese Verengung passieren muss. Da die Schmelze durch den statischen Mischer 3 homogenisiert wurde, treten gemäss diesem Ausführungsbeispiel keine örtlichen Temperaturschwankungen auf, sodass die Kunststoffschmelze homogen ist, das heisst, eine über den Umfang des Ringkanals einheitliche Zähigkeit aufweist. Hierdurch können Schwankungen in der Fliessgeschwindigkeit im Wesentlichen ausgeschlossen werden, sodass ein Extrudat hoher Qualität erhältlich ist.

Der statische Mischer 3 gemäss dieses Ausführungsbeispiels umfasst eine erste Gruppe 15 von Stegelementen sowie eine zweite Gruppe 16 von Stegelementen. Jede Gruppe kann eine Mehrzahl von Stegelementen umfassen. Je nach der Breite der Stegelemente und dem Durchmesser des Ringkanals 5 können 1 bis 30, vorzugsweise 1 bis 15, besonders bevorzugt 1 bis 5 Stegelemente zu einer Gruppe gehören. Je eine erste Gruppe 15 von Stegelementen ist benachbart zu je einer zweiten Gruppe 16 von Stegelementen angeordnet. Die Stegelemente der ersten Gruppe kreuzen sich jeweils mit den Stegelementen der zweiten Gruppe. Die Stegelemente jeder Gruppe verlaufen vorzugsweise zueinander parallel. Der statische Mischer 3 ist im vorliegenden Beispiel aus ca. 30-50 ersten Gruppen 15 und 30-50 zweiten Gruppen 16 aufgebaut. Jede der ersten und zweiten Gruppen 15, 16 weist somit eine konzentrische Ausrichtung auf, das heisst die Stegelemente verlaufen entlang von Kegelflächen, wobei die Spitzen der Kegel dieser Kegelflächen auf der Längsachse 7 zu liegen kommen. Die Stegelemente sind vorzugsweise stabförmig aufgebaut.

Auch hier ist ein zweiter statischer Mischer 13 stromabwärts des statischen Mischers 3 im Ringkanal 5 angeordnet. Nicht dargestellt ist eine Variante, gemäss welcher ein statischer Mischer im Eintrittskanal, welcher an die Eintrittsöffnung 6 anschliesst, angeordnet ist, und/oder ein statischer Mischer im Verteilkanal angeordnet ist. Der zweite statische Mischer 13 weist Einbauelemente auf, die wie die Einbauelemente des ersten statischen Mischers ausgestaltet sind, aber um einen Winkel, der vorzugsweise 90 Grad beträgt, versetzt zu den Einbauelementen des ersten statischen Mischers angeordnet sind. Die Einbauelemente umfassen eine erste Gruppe 15 von Stegelementen sowie eine zweite Gruppe 16 von Stegelementen. Die Stegelemente der ersten Gruppe 15 sind wiederum kreuzweise zu den Stegelementen der zweiten Gruppe 16 angeordnet. Allerdings sind die Stegelemente der einzelnen Gruppen nicht konzentrisch in Bezug auf die Längsachse angeordnet, sondern verlaufen tangential zur inneren Oberfläche, die durch das Dornelement 1 gebildet wird, sowie zur äusseren Oberfläche, welche durch die Innenwand 12 des Mantelelements 2 gebildet wird. Jede der Stegelementgruppen erstreckt sich daher nur über einen Teil des Umfangs, sodass in Umfangrichtung gesehen eine Mehrzahl von Gruppen 15, 16 von Stegelementen hintereinander angeordnet sind. Beispielsweise ist eine der Gruppe 15 entsprechende Gruppe 35 entlang des Umfangs des Dornelements 1 versetzt angeordnet. Eine der Gruppe 16 entsprechende Gruppe 36 ist ebenfalls entlang des Umfangs des Dornelements 1 versetzt zur Gruppe 16 angeordnet. Weitere gleichartige Gruppen schliessen an diese Gruppen 35, 36 an, sind aber nicht mehr näher bezeichnet. Gemäss dem vorliegenden Ausführungsbeispiel kreuzen die Stegelemente der Gruppe 15 sich sowohl mit der Gruppe 16 der Stegelemente als auch mit der benachbarten Gruppe 36, wobei die Ausrichtung der Stegelemente der Gruppe 16 gleich ist wie die Ausrichtung der Gruppe 36. Auch die Stegelemente der Gruppe 35 kreuzen sich sowohl mit der Gruppe 16 der Stegelemente als auch mit der benachbarten Gruppe 36, wobei die Ausrichtung der Stegelemente der Gruppe 16 gleich ist wie die Ausrichtung der Gruppe 36. Die Ausrichtung der Stegelemente der Gruppe 15 ist gleich wie die Ausrichtung der Stegelemente der Gruppe 35.

Die Stege der Stegelementgruppen der Mischer 3 bzw. 13 sind somit zueinander in einem Winkel von ungefähr 90 Grad versetzt. Hierdurch kann eine Umlagerung der Strömung erfolgen, sodass eine Mischwirkung auch für eine zähflüssige Polymerschmelze bereits entlang einer sehr kurzen Weglänge erzielt wird. Durch die Verwendung von zwei oder mehr in Strömungsrichtung hintereinander angeordneten Mischern kann bereits eine sehr gute Durchmischung einer derartigen zähflüssigen Polymerschmelze erzielt werden, für welche bislang im Stand der Technik eine mindestens doppelt so lange Mischstrecke benötigt wurde.

In Fig. 5d ist eine Ansicht auf die Vorrichtung gemäss Fig. 5c in Richtung der Längsachse 7 gezeigt. Die Längsachse 7 verläuft normal zur Zeichnungsebene. Der Schnitt verläuft somit durch den statischen Mischer 3. Der statische Mischer 3 enthält gemäss der vorliegenden Ausführungsform eine Mehrzahl von Stegelementen, die einer ersten und einer zweiten Stegelementgruppe zugeordnet sind. Der statische Mischer 3 ist im Mantelelement 2 aufgenommen und umschliesst den Konus 9, der in Fig. 5c nicht vollständig dargestellt ist, damit die Sicht auf die dahinter liegenden Stegelemente des statischen Mischers 3 nicht beeinträchtigt ist. Mittels des statischen Mischers 3 kann das Dornelement 1 im Innenraum des Mantelelements 2 gehalten werden. Durch Verwendung des statischen Mischers 3 ist auch eine Zentrierung des Dornelements 1 im Mantelelement 2 möglich, insbesondere an dem Ende, welches den Konus 9 enthält. Da in diesem Ausführungsbeispiel die Schmelze unmittelbar am Austritt des statischen Mischers homogenisiert ist, ist das Strömungsgeschwindigkeitsprofil homogen, sodass überraschenderweise die Strömung keine lange Wegstrecke zurücklegen muss und das Dornelement 1 eine Gesamtlänge aufweisen kann, die kleiner als das Vierfache des maximalen Durchmessers des Dornelements beträgt. Die Abweichung der minimalen Strömungsgeschwindigkeit von der maximalen Strömungsgeschwindigkeit beträgt dabei nicht mehr als je 10% von der Durchschnittsgeschwindigkeit, mit welcher die Kunststoffschmelze aus dem Mantelelement austritt. Das Extrudat weist daher beispielsweise keine inhomogene Oberfläche, keine Fehlstellen oder Schlieren auf, sodass eine konstant gute Produktqualität gewährleistet werden kann.

In Fig. 6 ist ein statischer Mischer 3 in einer stark vereinfachten perspektivischen Darstellung gezeigt. Der statische Mischer 3 ist rotationssymmetrisch um die Längsachse 7 angeordnet, die sich im Wesentlichen in Hauptströmungsrichtung eines fliessfähigen Mediums, beispielsweise einer Polymerschmelze, erstreckt, welches das Mantelelement 2 durchströmt. Der statische Mischer gemäss dieses Ausführungsbeispiels umfasst eine erste Gruppe 15 von Stegelementen sowie eine zweite Gruppe 16 von Stegelementen. Jede Gruppe kann eine Mehrzahl von Stegelementen umfassen. Je nach der der Breite der Stegelemente und dem Durchmesser des Ringkanals 5 können 1 bis 30, vorzugsweise 1 bis 15 Stegelemente zu einer Gruppe gehören.

Die Stegelemente, die zu einer Gruppe gehören, sind dadurch gekennzeichnet, dass sie auf einem gemeinsamen Konus liegen, dessen Spitze auf der Längsachse 7 des Mantelelements 2 sowie des koaxial dazu angeordneten Dornelements 1 liegt. Die Spitze des Konus, der durch die Stegelemente der ersten Gruppe 15 aufgespannt wird, liegt in der vorliegenden Darstellung unterhalb des Einbauorts des statischen Mischers 3. Die Spitze des Konus, der durch die Stegelemente der zweiten Gruppe 16 aufgespannt ist, liegt in der vorliegenden Darstellung oberhalb des Einbauorts des statischen Mischers 3. Die Mantelfläche des Konus, welcher von der ersten Gruppe 15 der Stegelemente aufgespannt wird, schneidet die Mantelfläche des Konus, der von der zweiten Gruppe 16 der Stegelemente aufgespannt wird. Wenn die Stegelemente keine Dicke hätten, wäre die der Schnitt ein Kreis, mit einem Radius, welcher grösser als der Radius der Aussenwand des Dornelements, aber kleiner als der Radius der Innenwand des Mantelelements ist. Da die Stegelemente aber eine endliche Dicke haben, ist der Schnittkörper ein im Wesentlichen ringförmiger Schnittkörper. Wenn die einzelnen Stegelemente, wie in der vorliegenden Darstellung, ebene Strömungsflächen im Wesentlichen in Trapezform aufweisen, liegen die Stegelemente einer jeden Gruppe nicht auf einem Konus, sondern auf einer n-eckigen Pyramide. Der Platzhalter n bezeichnet dabei die Anzahl der zu einer Gruppe gehörigen Stegelemente.

Die Stegelemente der ersten und zweiten Gruppe kreuzen sich in der vorliegenden Darstellung im Ringkanal 5. Ein Stegelement der ersten Gruppe 15 schliesst an ein Stegelement der zweiten Gruppe 16 an. Das Stegelement der ersten Gruppe ist somit kreuzweise zum Stegelement der zweiten Gruppe angeordnet. Die Stegelemente der ersten Gruppe wechseln somit mit den Stegelementen der zweiten Gruppe ab.

Die Stegelemente sind an ihrem ersten Ende mit der Aussenwand des Dornelements 1 verbunden. An ihrem zweiten Ende sind die Stegelemente mit der Innenwand des Mantelelements 2 verbunden. Die Aussenwand des Dornelements 1 ist schematisch durch die beiden in der vorliegenden Projektion ellipsenförmigen Begrenzungen der Zylinderfläche mit kleinem Radius angedeutet. Die Innenwand des Mantelelements 2 ist schematisch durch die beiden in der vorliegenden Projektion ellipsenförmigen Begrenzungen der Zylinderfläche mit grossem Radius angedeutet. Der Ringkanal 5 erstreckt sich zwischen dem Dornelement 1 und dem Mantelelement 2.

Unter der Länge eines Stegelements wird die Abmessung vom ersten Ende 17 bis zum zweiten Ende 18 des Stegelements entlang seiner Zentralachse 19 verstanden. Unter der Dicke des Stegelements wird die Abmessung normal zur Zentralachse von einer in Fig. 6 dargestellten oberen Kante zur gegenüberliegenden unteren Kante verstanden. Unter der Breite des Stegelements wird dessen Ausdehnung quer zur Fliessrichtung verstanden, wobei die Fliessrichtung in Fig. 6 in vertikaler Richtung liegt, wie durch die Pfeile 20 veranschaulicht wird.

Die Breite des Stegelements kann von dessen innerer Kante, die sich am ersten Ende 17 befindet, zu dessen äusserer Kante, die sich am zweiten Ende 18 befindet, variieren.

Insbesondere kann die Breite des Stegelements vom ersten Ende 17 bis zum zweiten Ende 18 entlang einer Schnittebene, die normal zur Zentralachse 19 verläuft, zunehmen.

Fig. 7 zeigt eine Variante, gemäss welcher die Stegelemente einen oder mehrere Kanäle 21 aufweisen, die von einem Wärmeträgerfluid durchströmt werden können. Die vorliegende Darstellung zeigt nur einen Teil der Stegelemente. Wie in Fig. 6 bilden die Stegelemente zwei Gruppen 15, 16 aus, wobei jeweils zueinander benachbarte Stegelemente zu verschiedenen Gruppen gehören.

Der Kanal 21 des Stegelements 25 der ersten Gruppe 15 verläuft von einem ersten Ende 17 zu einem zweiten Ende 18 des Stegelements. Der Kanal 21 kann eine Querschnittsfläche in der Form eines Rundelements aufweisen. Das Rundelement ist aus der Gruppe der Kreise, Ellipsen, abgerundeten Vierecke oder Vielecke erhältlich.

Der statische Mischer 3 kann als monolithische Struktur im Giessverfahren hergestellt sein, das heisst, der statische Mischer 3 kann mit einem Mantelkörper 30 verbunden sein, welcher die Zufuhrkanäle und Abfuhrkanäle für ein Wärmeträgerfluid enthält. Der Mantelkörper 30 ist in dem Mantelelement 2 aufgenommen. Das Mantelelement 30 enthält einen nicht dargestellten Zulaufstutzen und einen Ablassstutzen für ein Wärmeträgerfluid. Der Mantelkörper 30 enthält einen Verteilerkanal 31 für die Verteilung des Wärmeträgerfluids auf eine Mehrzahl von Zuleitungskanälen, die ebenfalls der Übersichtlichkeit halber nicht dargestellt sind.

Das Dornelement 1 enthält einen Sammelkanal 32 für die Zusammenführung des Wärmeträgerfluids von einer Mehrzahl an Ableitungskanälen. Beispielsweise stehen je ein Zuleitungskanal und ein Ableitungskanal mit dem ersten und zweiten Ende 17, 18 des Stegelements 25 in fluidleitender Verbindung. Für jedes der Stegelemente, die Kanäle enthalten, ist mindestens ein Zuleitungskanal vorgesehen, welcher das Wärmeträgerfluid dem entsprechenden Kanal im Stegelement zuführt und ein Ableitungskanal welcher das Wärmeträgerfluid vom Kanal im Stegelement in einen Sammelkanal 32 des Dornelements 1 leitet. Das Wärmeträgerfluid wird in diesem Fall durch das Dornelement abgeleitet. Auch die umgekehrte Wegrichtung wäre möglich. Des Weiteren könnten das Mantelelement 2 und das Dornelement 1 sowohl Verteilkanäle als auch Sammelkanäle enthalten.

In Fig. 7 sind die Stegelemente 25, 26, 27 der ersten Gruppe 15 dargestellt, sowie die Stegelemente 28, 29 der zweiten Gruppe 16. Die Kanäle in diesen Stegelementen sind grösstenteils nicht sichtbar, sie sind daher nicht bezeichnet.

Der Übergang von zumindest einem der ersten und zweiten Enden 17, 18 des Stegelements 21 zu dem jeweils korrespondierenden Zuleitungskanal oder Ableitungskanal im Mantelkörper 30 des Mantelelements 2 erfolgt vorzugsweise spaltfrei.

Nach einem nicht dargestellten Ausführungsbeispiel könnte der statische Mischer eine Mehrzahl von ersten Gruppen 15 und zweiten Gruppen 16 von Stegelementen enthalten. Daher werden in der Beschreibung die erste Gruppe 15 und die zweite Gruppe 16 als stellvertretend für eine Mehrzahl weiterer gleichartiger oder verschiedener erster oder zweiter Gruppen angesehen. Wie viele Gruppenpaare im Einzelfall vorgesehen sind, hängt von der konkreten Misch- und Wärmeaustauschaufgabe ab. Das heisst, wenn in diesen Unterlagen nur die erste und die zweite Gruppe beschrieben sind, kann daraus nicht abgeleitet werden, dass nur dieses besondere Ausführungsbeispiel offenbart ist, vielmehr sollen Ausführungsbeispiele mit einer Mehrzahl von Gruppenpaaren, wobei jedes dieser Gruppenpaare aus je einer ersten und einer zweiten Gruppe besteht, von dieser Beschreibung mit erfasst sein. Der Einfachheit halber wird die Beschreibung auf je eines der Gruppenpaare beschränkt, auf eine Wiederholung der Beschreibung für allfällige weitere Gruppenpaare wird daher verzichtet.

Die Kanäle 21 verlaufen im Inneren der Stegelemente, sodass keine Verbindung zwischen den Kanälen im Inneren der Stegelemente und dem Mischraum, welcher die Stegelemente umgibt, besteht. Der Mischraum befindet sich im Ringkanal 5.

Die ersten und zweiten Gruppen 15, 16 spannen je einen Konus auf, der einen Neigungswinkel von 25 bis 75 Grad zur Längsachse 7 geneigt ist. In der vorliegenden Darstellung beträgt der Winkel 30 bis 60 Grad zur Längsachse 7, in vielen Fällen im Wesentlichen 45 Grad zur Längsachse 7.

Wenn der statische Mischer 3 mehrere hintereinander angeordneten Gruppen aufweist, werden diese Gruppen vorteilhafterweise so angeordnet, dass sie überlappen, um so viel aktive Wärmeaustauschfläche wie möglich in dem vom Mantelelement 2 gebildeten Volumen bereitzustellen. Unter Überlappen ist zu verstehen, dass mindestens ein Teil der Stegelemente einer ersten Gruppe und ein Teil der Stegelemente einer nachfolgenden Gruppe und/oder ein Teil der Stegelemente einer vorhergehenden Gruppe im gleichen in Fliessrichtung gesehenen Ringkanalabschnitt angeordnet sind. Die Projektion der Länge des Stegelements auf die Längsachse 7 ergibt eine Länge L1 und die Projektion des überlappenden Teils der Stegelemente der benachbarten Gruppe auf die Längsachse 7 ergibt eine Länge L2, wobei L2 kleiner als L1 ist und L2 grösser 0 ist. Der betrachtete Ringkanalabschnitt wird dabei so definiert, dass er die Länge L1 plus die Länge L2 aufweist, das heisst das Hüllvolumen eines der Stegelemente 25, 26, 27, 28, 29 darstellt. Das Hüllvolumen ist bei einem zylinderförmigen Mantelelement mit einem Ringkanal mit kreisförmigem Querschnitt ein Torus mit der Länge L1 plus n mal L2, wobei n+1 die Anzahl der insgesamt im Ringkanal hintereinander angeordneten Gruppen ist. Die in den Stegelementen verlaufenden Kanäle können ovalen oder kreisförmigen Querschnitt aufweisen. Die Kanäle können auch andere Querschnittsflächen aufweisen, beispielsweise eine dreieckige, viereckige oder mehreckige Querschnittsfläche aufweisen.

Fig. 8 zeigt eine erste Variante einer Extrusionsanordnung mit einem statischen Mischer 3 nach einem der vorhergehenden Ausführungsbeispiele. Diese Extrusionsanordnung besteht aus einem Extruder 50 sowie einer Transferleitung 55, welche den Extruder 50 mit einer Vorrichtung 4 verbindet, in welcher ein ringförmiges Extrudat erzeugt wird. Der Extruder weist ein Schneckenelement 54 auf, welches über einen zugehörigen Antrieb 53 antreibbar ist. Der Kunststoff kann dem Extruder über eine Aufgabevorrichtung 51 zugeführt werden. Die Vorrichtung umfasst ein Mantelelement 2, ein Dornelement 1, welches im Mantelelement 2 angeordnet ist. Das Mantelelement 2 enthält einen Schmelzekanal. Das Dornelement 1 ist im Schmelzekanal angeordnet, sodass der Schmelzekanal sich zumindest am Austrittsende 14 aus der Vorrichtung ringförmig um das Dornelement erstreckt. Zwischen dem Dornelement 1 und dem Mantelelement 2 wird ein Ringkanal 5 ausgebildet. Der Ringkanal 5 enthält einen statischen Mischer 3. Das Dornelement 1 wird durch den statischen Mischer 3 im Mantelelement 2 gehalten. Ein weiterer statischer Mischer 33 kann in der Transferleitung 55 vorgesehen sein. Alternativ oder in Ergänzung hierzu kann ein statischer Mischer im Verteilkanal 8 angeordnet sein, der sich zwischen der Transferleitung 55 und dem Ringkanal 5 erstreckt. Der Verteilkanal dient der Zuführung der Kunststoffschmelze zum Ringkanal 5.

Fig. 9 zeigt eine zweite Variante einer Extrusionsanordnung mit einem statischen Mischer 3 nach einem der vorhergehenden Ausführungsbeispiele. Diese Extrusionsanordnung besteht aus einem Extruder 50 sowie einer Transferleitung 55, welche den Extruder 50 mit einer Vorrichtung 4 verbindet, in welcher ein ringförmiges Extrudat erzeugt wird. Der Extruder weist ein Schneckenelement 54 auf, welches über einen zugehörigen Antrieb 53 antreibbar ist. Der Kunststoff kann dem Extruder über eine Aufgabevorrichtung 51 zugeführt werden. Die Vorrichtung umfasst ein Mantelelement 2 und ein Dornelement 1, welches in einem Mantelelement 2 angeordnet ist. Das Mantelelement 2 enthält einen Schmelzekanal. Das Dornelement 1 ist im Schmelzekanal angeordnet, sodass der Schmelzekanal sich zumindest am Austrittsende 14 aus der Vorrichtung ringförmig um das Dornelement erstreckt. Zwischen dem Dornelement 1 und dem Mantelelement 2 wird ein Ringkanal 5 ausgebildet. Der Ringkanal 5 enthält einen statischen Mischer 3 sowie einen weiteren statischen Mischer 13. Das Dornelement 1 wird durch die statischen Mischer 3, 13 im Mantelelement 2 gehalten.

Fig. 10 zeigt eine dritte Variante einer Extrusionsanordnung mit einem statischen Mischer 3 nach einem der vorhergehenden Ausführungsbeispiele. Diese Extrusionsanordnung besteht aus einem ersten Extruder 50, einem zweiten Extruder 60 einer Transferleitung 55, welche den ersten Extruder 50 mit dem zweiten Extruder 60 verbindet sowie eine Vorrichtung 4, durch welche die Kunststoffschmelze die Extrusionsanordnung verlässt. In der vorliegenden Extrusionsanordnung kann ein Verfahren zur Herstellung von niederdichten Schäumen durchgeführt werden. Hierzu wird ein Kunststoff, der aus einem Aufgabebehälter 51 in den Extruder eingefüllt werden kann, in dem ersten Extruder 50 zu einer Kunststoffschmelze aufgeschmolzen. Der Kunststoffschmelze ein Treibmittel über eine Treibmittelzugabevorrichtung 52 zugegeben. Anschliessend wird das Treibmittel in der Schmelze durch Misch- und Dispergiervorgänge im ersten Extruder 50 und/oder einer von einem statischen Mischer gebildeten statischen Mischstrecke oder der in der Transferleitung 55 zwischen erstem Extruder 50 und einem zweitem Extruder 60 und/oder im zweiten Extruder 60 gelöst. Danach wird die mit Treibmittel beladene Schmelze in dem zweiten Extruder 60 gekühlt, danach die Schmelze in die Vorrichtung 4 eingeleitet. Die Vorrichtung 4 enthält den statischen Mischer 3, mittels welchem die Temperatur der Schmelze über den ganzen Querschnitt ausgeglichen wird und der gleichzeitig gekühlt oder geheizt werden kann, um eine exakte Schmelzetemperatur zu erreichen. Danach wird die temperaturstabilisierte gekühlte Schmelze beispielsweise über ein Ringdüsenelement 70 ausgetragen. Die Vorrichtung 4 ist vorteilhafterweise nach einem der vorhergehenden Ausführungsbeispiele ausgebildet. Durch den statischen Mischer 3 wird die Temperatur der Schmelze vorteilhafterweise derart ausgeglichen, dass die niedrigste und höchste Temperatur im Schmelzequerschnitt nach dem statischen Mischer um weniger als 5 Grad Celsius auseinander liegen. Insbesondere kann durch den statischen Mischer 3 die Temperatur so weit ausgeglichen werden, dass niedrigste und höchste Temperatur im Schmelzequerschnitt nach dem statischen Mischer um weniger als 3 Grad Celsius auseinander liegen, besonders bevorzugt um weniger als 1.5 Grad Celsius auseinander liegen.

Vorteilhafterweise kann die Schmelzetemperatur nach dem Mischer über den kühl- und heizbaren Mischer 3 geregelt werden. Unter Schmelzetemperatur nach dem Mischer wird die in der Schmelze vorherrschende Temperatur nach deren Austritt aus dem statischen Mischer 3 zum Beispiel am Ende des Mantelelements 2 verstanden. Das Treibmittel kann mittels einer Treibmittelzugabevorrichtung 52 und/oder über die Kunststoffrohmaterialzugabe in den Aufgabebehälter 51 zugegeben werden, welche am ersten Extruder 50 angeordnet ist. Zusätzlich oder alternativ hierzu kann das Treibmittel auch über eine Treibmittelzugabevorrichtung 62 zugegeben werden, welche am zweiten Extruder 60 angeordnet ist oder über eine Zugabevorrichtung, die in der Transferleitung 55 angebracht ist. Somit kann das Treibmittel in die Schmelze in zumindest einen der ersten oder zweiten Extruder oder in der Transferleitung zugegeben werden.

Die Erfindung ist nicht auf die vorliegenden Ausführungsbeispiele beschränkt. Die Stegelemente können sich in ihrer Anzahl und in ihren Abmessungen unterscheiden. Anstatt von Stegelementen können Rohrelemente oder flächige Elemente, beispielsweise Flügelelemente vorgesehen sein. Des Weiteren kann sich die Anzahl der Kanäle in den Stegelementen je nach dem geforderten Wärmebedarf oder Kältebedarf für die Wärmeübertragung unterscheiden. Auch können die Neigungswinkel, den die Gruppen zur Längsachse einschliessen, je nach Anwendung variieren. Es können auch eine Mehrzahl von gleichartigen statischen Mischern oder statischen Mischern unterschiedlicher Bauart in beliebiger Reihenfolge hintereinander angeordnet werden im Ringspalt oder auf dem Weg der Schmelze zwischen dem Extruderaustritt und der Vorrichtung.

## Patentansprüche

1. Verfahren zur Herstellung eines ringförmigen Extrudats, wobei ein Kunststoff in einem Extruder (50) zu einer Kunststoffschmelze aufgeschmolzen wird, die Kunststoffschmelze nach Verlassen des Extruders (50) in einen Schmelzekanal eintritt, der in einem ortsfesten Mantelelement (2) einer Vorrichtung (4) angeordnet ist, wobei in dem Schmelzekanal ein ortsfestes Dornelement (1) angeordnet ist, um welches die Kunststoffschmelze herum fließt, sodass durch das Dornelement (1) ein ringförmiger Schmelzestrom erzeugt wird, wobei zwischen dem Dornelement (1) und dem Mantelelement (2) ein ringförmiger Kanal (5) ausgebildet wird, wobei der ringförmige Kanal einen statischen Mischer (3) enthält, wobei das Dornelement (1) durch den statischen Mischer (3) im Mantelelement (2) befestigt ist, wobei der statische Mischer (3) eine Mehrzahl von Einbauelementen umfasst, wobei zumindest ein Teil der Einbauelemente mit dem Dornelement (1) und mit dem Mantelelement (2) verbunden ist, sodass über die Einbauelemente eine Kraft vom Dornelement (1) auf das Mantelelement (2) übertragen wird, sodass der ringförmige Schmelzestrom am Austrittsende (14) der Vorrichtung (4) eine homogene Temperatur aufweist, wobei mindestens 20% der Kräfte, die durch die Kunststoffschmelze auf das Dornelement (1) einwirken, über den statischen Mischer (3) in das Mantelelement (2) eingeleitet werden, wobei der Ringkanal (5) eine Mehrzahl von statischen Mischern enthält, die in Strömungsrichtung hintereinander angeordnet sind, wobei der Ringkanal (5) einen ersten statischen Mischer (3) und einen zweiten statischen Mischer (13) enthält, **dadurch gekennzeichnet, dass** der erste statische Mischer (3) in einem Abstand zum zweiten statischen Mischer (13) angeordnet ist, der frei von Einbauelementen ist.

2. Verfahren nach Anspruch 1, wobei der statische Mischer (3) gekühlt wird, um eine temperaturstabilisierte gekühlte Schmelze zu erhalten, sodass die Distanz zwischen dem in Fließrichtung zuletzt durchströmten statischen Mischer (3) und dem Austrittsende der Vorrichtung maximal 30 cm beträgt.

3. Verfahren nach einem der Ansprüche 1 oder 2, wobei der Kunststoffschmelze ein Treibmittel zugegeben wird, sodass eine mit Treibmittel beladene Schmelze erhalten wird, die einem zweiten Extruder (60) zugeführt wird, danach die mit Treibmittel beladene Schmelze in dem zweiten Extruder (60) gekühlt wird.

4. Verfahren nach einem der vorhergehenden Ansprüche 1 bis 3, wobei im Ringkanal (5) ein Temperaturausgleich erfolgt, wobei die Schmelze durch einen dynamischen Mischer, einen statischen Mischer, einen Wärmetauscher oder eine Transferleitung, die insbesondere als beheizbares oder kühlbares Rohrelement ausgebildet sein kann, oder durch eine Kombination von zumindest zwei der vorgenannten Vorrichtungen geführt wird, bevor sie in den Ringkanal eintritt oder während sie den Ringkanal durchströmt.

5. Verfahren nach einem der vorhergehenden Ansprüche, wobei vor oder in der Vorrichtung (4) ein Fluid oder ein Gas zudosiert wird, wobei das Fluid oder das Gas zumindest ein Element aus der Gruppe der Additive, Farbstoffe oder Treibmittel enthält.

6. Verfahren nach einem der vorhergehenden Ansprüche, wobei mittels der Vorrichtung (4) mehrere ringförmige Extrudate als aufeinanderliegende Schichten erzeugt werden.

## Claims

1. A method for the manufacture of an annular extrudate, wherein a polymeric material is molten in an extruder (50) to a polymer melt, the polymer melt enters a melt passage subsequent to the extruder (50), wherein the melt passage is arranged in a stationary jacket (2) of a device (4), wherein a stationary crosshead (1) is arranged in the melt passage, and the melt flows around the crosshead such that an annular melt flow is generated by the crosshead (1), wherein an annular passage (5) is formed between the crosshead (1) and the jacket (2), wherein the annular passage contains a static mixer (3), wherein the crosshead (1) is supported by the static mixer (3) in the jacket (2), wherein the static mixer (3) comprises a plurality of inserts, wherein at least a portion of the inserts is attached to the crosshead (1) and the jacket (2), such that a force is transmitted from the crosshead (1) to the jacket (2), such that the annular melt flow has a homogeneous temperature at the discharge end (14) of the device (4), wherein at least 20% of the forces which act on the crosshead (1) by the polymer melt are introduced via the static mixer (3) into the jacket (2), wherein the annular passage (5) comprises a plurality of static mixers, which are arranged serially in the direction of flow, wherein the annular passage (5) contains a first static mixer (3) and a second static mixer (13), **characterized in that** the first static mixer (3) is arranged at a distance to the second static mixer (13) which is free from inserts.

2. The method according to claim 1, wherein the static mixer is cooled to obtain a temperature stabilized cooled melt such that the distance between the last static mixer (3) in the direction of flow and the discharge end of the device amounts to at most 30 cm.

3. The method according to one of claims 1 or 2, wherein a blowing agent is added to the polymer melt such that a blowing agent containing melt is obtained, which is supplied to a second extruder (60) and the blowing agent containing melt is cooled in the second extruder (60).

4. The method according to one of claims 1 to 3, wherein a temperature equalization is reached in the annular passage (5), wherein the polymer melt is guided through one of a dynamic mixer, a static mixer, a heat exchanger or a transfer conduit, which can be configured as a heatable or coolable tube element or through a combination of at least two of the previously named devices prior to entering the annular passage or during its flow through the annular passage.

5. The method according to one of the preceding claims, wherein a fluid or a gas is added in the device (4), wherein the fluid or gas comprises at least an element of the group of additives, coloring agents or blowing agents.

6. The method according to one of the preceding claims, wherein a plurality of annular extrudates is manufactured by the device (4) as superposed layers.

## Revendications

1. Procédé de production d'un extrudé annulaire, dans lequel une matière plastique est fondue dans une extrudeuse (50) pour former une matière plastique en fusion, la matière plastique en fusion pénètre après avoir quitté l'extrudeuse (50) dans un canal de matière fondue, que est arrangée dans un élément de chemise (2) d'un dispositif (4), en ce qu' un mandrin fixe (1) est disposé dans le canal de matière fondue autour duquel s'écoule la matière plastique en fusion, de sorte qu'un courant de fusion annulaire soit généré par le mandrin (1), en ce qu' un canal annulaire (5) est formé entre le mandrin (1) et l'élément de chemise (2), le canal annulaire comprenant un mélangeur statique (3), le mandrin (1) étant fixé par le mélangeur statique (3) dans l'élément de chemise (2), en ce que le mélangeur statique (3) comprend une pluralité des éléments intégrés, en ce qu'au moins une partie des éléments intégrés est reliée au mandrin (1) et à l'élément de chemise (2) de sorte qu'une force soit transmise du mandrin (1) à l'élément de de chemise (2) par les éléments intégrés, de sorte que le courant de fusion annulaire a au niveau de l'extrémité de sortie (14) du dispositif (4) une température homogène, en ce qu'au moins 20% des forces agissant sur le mandrin (1) par la matière plastique en fusion étant introduites via le mélangeur statique (3) dans l'élément de chemise (2), en ce que le canal annulaire (5) comprend une pluralité de mélangeurs statiques disposés l'un derrière l'autre dans le sens de l'écoulement, le canal annulaire (5) contenant un premier mélangeur statique (3) et un deuxième mélangeur statique (13), **caractérisé en ce que** le premier mélangeur statique (3) est disposé à distance du deuxième mélangeur statique (13), qui est exempt d'éléments intégrés.

2. Le procédé selon la revendication 1, dans lequel le mélangeur statique (3) est refroidi pour obtenir une matière fondue refroidie stabilisée à la température, de sorte que la distance entre le dernier mélangeur statique dans le sens d'écoulement (3) et l'extrémité de sortie du dispositif soit au maximum de 30 cm.

3. Le procédé selon l'une des revendications 1 ou 2, dans lequel un agent d'expansion est ajouté à la matière plastique fondue pour obtenir une matière fondue chargée en agent d'expansion qui est chargée dans une deuxième extrudeuse (60), ensuite la matière fondue chargée en agent d'expansion est refroidie dans la deuxième extrudeuse (60).

4. Le procédé selon l'une des revendications précédentes 1 à 3, en ce qu' une compensation de température a lieu dans le canal annulaire (5), en ce que la matière fondue est passée par un mélangeur dynamique, un mélangeur statique, un échangeur de chaleur ou une ligne de transfert, qui peut être formée en particulier comme un élément tubulaire pouvant être chauffé ou refroidi, ou par une combinaison d'au moins deux des dispositifs susmentionnés avant d'entrer dans le canal annulaire ou pendant qu'elle traverse le canal annulaire.

5. Le procédé selon l'une des revendications précédentes dans lequel on ajoute avant ou dans le dispositif (4) un fluide ou un gaz, dans lequel le fluide ou le gaz contient au moins un élément du groupe des additifs, des colorants ou des agents d'expansion.

6. Le procédé selon l'une des revendications précédentes, dans lequel, à l'aide du dispositif (4), plusieurs extrudés annulaires sont produits sous forme de couches superposées.
